# EUROPEAN PATENT SPECIFICATION

(11) **EP 4 111 767 B1**
(45) Date of publication and mention of the grant of the patent: **06.11.2024**
(21) Application number: 21700660.0
(22) Date of filing: 11.01.2021
(51) Int. Cl.: H04W 64/00

(54) **DETERMINATION OF SPATIAL RELATIONS FOR POSITIONING**
BESTIMMUNG VON RÄUMLICHEN BEZIEHUNGEN ZUR POSITIONIERUNG
DÉTERMINATION DE RELATIONS SPATIALES POUR LE POSITIONNEMENT

(30) Priority: 28.02.2020 US 202062982768 P
(43) Date of publication of application: 04.01.2023
(73) Proprietor: Telefonaktiebolaget LM Ericsson (publ), 164 83 Stockholm (SE)
(72) Inventor: SHREEVASTAV, Ritesh, 194 47 Upplands Väsby (SE); GUNNARSSON, Fredrik, 587 50 Linköping (SE)
(74) Representative: Ericsson
(86) International application number: PCT/SE2021/050009
(87) International publication number: WO 2021/173052

(56) References cited:
- WO-A1-2019/159024
- ERICSSON: "Spatial Relations and MAC CE", vol. RAN WG2, no. Electronic meeting; 20200224 - 20200306, 14 February 2020 (2020-02-14), XP051849555, Retrieved from the Internet <URL:https://ftp.3gpp.org/tsg_ran/WG2_RL2/TSGR2_109_e/Docs/R2-2001237.zip> [retrieved on 20200214]
- QUALCOMM INCORPORATED: "Semi-persistent and aperiodic SRS-for-positioning", vol. RAN WG2, no. Online; 20200224 - 20200306, 14 February 2020 (2020-02-14), XP051849544, Retrieved from the Internet <URL:https://ftp.3gpp.org/tsg_ran/WG2_RL2/TSGR2_109_e/Docs/R2-2001214.zip> [retrieved on 20200214]
- HUAWEI ET AL: "Considerations on UL only positioning method in NR", vol. RAN WG2, no. Chongqing, China; 20191014 - 20191018, 3 October 2019 (2019-10-03), XP051804083, Retrieved from the Internet <URL:https://ftp.3gpp.org/tsg_ran/WG2_RL2/TSGR2_107bis/Docs/R2-1913039.zip> [retrieved on 20191003]
- QUALCOMM INCORPORATED: "DL and UL NR Positioning Procedures", vol. RAN WG2, no. Chongqing, China; 20191014 - 20191018, 4 October 2019 (2019-10-04), XP051804974, Retrieved from the Internet <URL:https://ftp.3gpp.org/tsg_ran/WG2_RL2/TSGR2_107bis/Docs/R2-1913395.zip> [retrieved on 20191004]

## Description

### TECHNICAL FIELD

Embodiments of the present disclosure generally relate to wireless communication networks, and particularly relates to improving capabilities for locating wireless devices based on reference signals transmitted and/or received in a terrestrial wireless network.

### BACKGROUND

Currently the fifth generation ("5G") of cellular systems, also referred to as New Radio (NR), is being standardized within the Third-Generation Partnership Project (3GPP). NR is developed for maximum flexibility to support multiple and substantially different use cases. These include enhanced mobile broadband (eMBB), machine type communications (MTC), ultra-reliable low latency communications (URLLC), side-link device-to-device (D2D), and several other use cases. The present disclosure relates generally to NR, but the following description of Long Term Evolution (LTE) technology is provided for context since it shares many features with NR.

LTE is an umbrella term for fourth generation (4G) radio access technologies (RATs) developed within 3GPP and initially standardized in Releases 8 and 9, also known as Evolved UTRAN (E-UTRAN). LTE is available in various frequency bands and is accompanied by improvements to non-radio aspects referred to as System Architecture Evolution (SAE), including the Evolved Packet Core (EPC) network. LTE continues to evolve through subsequent releases.

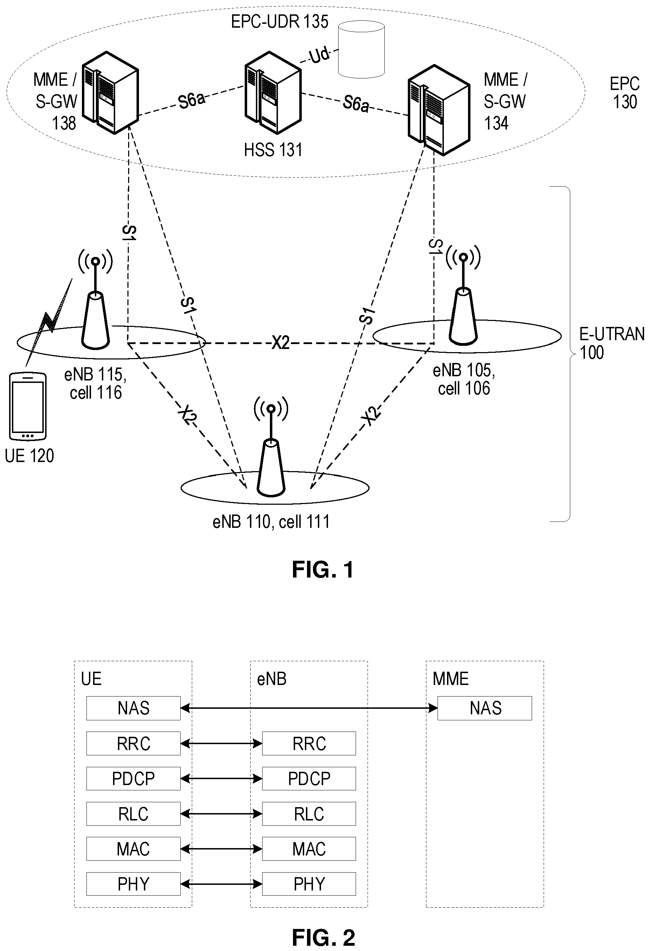

An overall exemplary architecture of a network comprising LTE and SAE is shown in Figure 1. E-UTRAN 100 includes one or more evolved Node B's (eNB), such as eNBs 105, 110, and 115, and one or more user equipment (UE), such as UE 120. As used within the 3GPP standards, "user equipment" or "UE" means any wireless communication device (e.g., smartphone or computing device) that is capable of communicating with 3GPP-standard-compliant network equipment, including E-UTRAN as well as UTRAN and/or GERAN, as the third-generation ("3G") and second-generation ("2G") 3GPP RANs are commonly known.

As specified by 3GPP, E-UTRAN 100 is responsible for all radio-related functions in the network, including radio bearer control, radio admission control, radio mobility control, scheduling, and dynamic allocation of resources to UEs in uplink and downlink, as well as security of the communications with the UE. These functions reside in the eNBs, such as eNBs 105, 110, and 115. Each of the eNBs can serve a geographic coverage area including one more cells, including cells 106, 111, and 115 served by eNBs 105, 110, and 115, respectively.

The eNBs in the E-UTRAN communicate with each other via the X2 interface, as shown in Figure 1. The eNBs also are responsible for the E-UTRAN interface to the EPC 130, specifically the S1 interface to the Mobility Management Entity (MME) and the Serving Gateway (SGW), shown collectively as MME/S-GWs 134 and 138 in Figure 1. In general, the MME/S-GW handles both the overall control of the UE and data flow between the UE and the rest of the EPC. More specifically, the MME processes the signaling (e.g., control plane) protocols between the UE and the EPC, which are known as the Non-Access Stratum (NAS) protocols. The S-GW handles all Internet Protocol (IP) data packets (e.g., data or user plane) between the UE and the EPC and serves as the local mobility anchor for the data bearers when the UE moves between eNBs, such as eNBs 105, 110, and 115.

EPC 130 can also include a Home Subscriber Server (HSS) 131, which manages user- and subscriber-related information. HSS 131 can also provide support functions in mobility management, call and session setup, user authentication and access authorization. The functions of HSS 131 can be related to the functions of legacy Home Location Register (HLR) and Authentication Centre (AuC) functions or operations. HSS 131 can also communicate with MMEs 134 and 138 via respective S6a interfaces.

In some embodiments, HSS 131 can communicate with a user data repository (UDR) - labelled EPC-UDR 135 in Figure 1 - via a Ud interface. EPC-UDR 135 can store user credentials after they have been encrypted by AuC algorithms. These algorithms are not standardized (i.e., vendor-specific), such that encrypted credentials stored in EPC-UDR 135 are inaccessible by any other vendor than the vendor of HSS 131.

Figure 2 illustrates a block diagram of an exemplary control plane (CP) protocol stack between a UE, an eNB, and an MME. The exemplary protocol stack includes Physical (PHY), Medium Access Control (MAC), Radio Link Control (RLC), Packet Data Convergence Protocol (PDCP), and Radio Resource Control (RRC) layers between the UE and eNB. The PHY layer is concerned with how and what characteristics are used to transfer data over transport channels on the LTE radio interface. The MAC layer provides data transfer services on logical channels, maps logical channels to PHY transport channels, and reallocates PHY resources to support these services. The RLC layer provides error detection and/or correction, concatenation, segmentation, and reassembly, reordering of data transferred to or from the upper layers. The PDCP layer provides ciphering/deciphering and integrity protection for both CP and user plane (UP), as well as other UP functions such as header compression. The exemplary protocol stack also includes non-access stratum (NAS) signaling between the UE and the MME.

The RRC layer controls communications between a UE and an eNB at the radio interface, as well as the mobility of a UE between cells in the E-UTRAN. After a LTE is powered ON it will be in the RRC IDLE state until an RRC connection is established with the network, at which time the UE will transition to RRC_CONNECTED state (*e.g.*, where data transfer can occur). The UE returns to RRC IDLE after the connection with the network is released. In RRC_IDLE state, the UE does not belong to any cell, no RRC context has been established for the UE (e.g., in E-UTRAN), and the UE is out of UL synchronization with the network. Even so, a UE in RRC_IDLE state is known in the EPC and has an assigned IP address.

Furthermore, in RRC_IDLE state, the UE's radio is active on a discontinuous reception (DRX) schedule configured by upper layers. During DRX active periods (also referred to as "DRX On durations"), an RRC_IDLE UE receives system information (SI) broadcast by a serving cell, performs measurements of neighbor cells to support cell reselection, and monitors a paging channel for pages from the EPC via an eNB serving the cell in which the UE is camping.

A UE must perform a random-access (RA) procedure to move from RRC_IDLE to RRC_CONNECTED state. In RRC_CONNECTED state, the cell serving the UE is known and an RRC context is established for the UE in the serving eNB, such that the UE and eNB can communicate. For example, a Cell Radio Network Temporary Identifier (C-RNTI) - a UE identity used for signaling between UE and network - is configured for a UE in RRC_CONNECTED state.

LTE Rel-10 adds support for bandwidths larger than 20 MHz, while remaining backward compatible with Rel-8. As such, a wideband LTE Rel-10 carrier (e.g., wider than 20 MHz) should appear as a number of carriers (referred to as "component carriers" or "CCs") to an LTE Rel-8 terminal. For an efficient use of a wideband Rel-10 carrier, legacy (e.g., Rel-8) terminals can be scheduled in all parts of the wideband LTE Rel-10 carrier. One way to achieve this is by Carrier Aggregation (CA), whereby an LTE Rel-10 terminal can receive multiple CCs, each preferably having the same structure as a Rel-8 carrier. Additionally, in the context of CA, the terms "carrier," "component carrier," (or CC, for short) and "cell" are often used interchangeably.

The multiple access scheme for the LTE PHY is based on Orthogonal Frequency Division Multiplexing (OFDM) with a cyclic prefix (CP) in the downlink (DL), and on Single-Carrier Frequency Division Multiple Access (SC-FDMA) with a cyclic prefix in the uplink (UL). To support transmission in paired and unpaired spectrum, the LTE PHY supports both Frequency Division Duplexing (FDD) (including both full- and half-duplex operation) and Time Division Duplexing (TDD). The LTE FDD downlink (DL) radio frame has a fixed duration of 10 ms and consists of 20 0.5-ms slots. A 1-ms subframe includes two consecutive slots, each of which includes N^{DL}_{symb} OFDM symbols comprised of N_{SC} OFDM subcarriers. Similarly, each UL slot consists of N^{UL}_{symb} OFDM symbols, each of which includes N_{SC} OFDM subcarriers. A combination of a particular subcarrier in a particular symbol is known as a resource element (RE).

The LTE PHY maps various DL and UL physical channels to the resources described above. In general, a physical channel corresponds to a set of REs carrying information that originates from higher layers. Within the LTE DL and UL, certain REs within each LTE subframe are reserved for the transmission of reference signals. DL demodulation reference signals (DM-RS) are transmitted to aid the UE in the reception of an associated physical channel (e.g., PDCCH or PDSCH). Other DL reference signals include cell-specific reference signals (CRS), positioning reference signals (PRS), and CSI reference signals (CSI-RS). Other RS-like DL signals include Primary Synchronization Sequence (PSS) and Secondary Synchronization Sequence (SSS), which facilitate the UEs time and frequency synchronization and acquisition of system parameters (e.g., via PBCH). UL reference signals include DM-RS that are transmitted to aid the eNB in the reception of an associated physical channel (e.g., PUCCH or PUSCH); and sounding reference signals (SRS), which are not associated with any uplink channel.

3GPP standards provide various ways for positioning (e.g., determining the position of, locating, and/or determining the location of) UEs operating in LTE networks. In general, an LTE positioning node (referred to as "E-SMLC" or "location server") configures the target device (e.g., UE), an eNB, or a radio network node dedicated for positioning measurements (e.g., a "location measurement unit" or "LMU") to perform one or more positioning measurements according to one or more positioning methods. For example, the positioning measurements can include timing (and/or timing difference) measurements on UE, network, and/or satellite transmissions. The positioning measurements are used by the target device, the measuring node, and/or the positioning node to determine the location of the target device.

UE positioning is expected to be an important feature for NR networks, and may include additional UE positioning use cases, scenarios, and/or applications beyond those for LTE. Positioning in NR Rel-16 is generally based on NR radio technology, which can provide added value in terms of enhanced location capabilities. For example, NR operation in low and high frequency bands (i.e., below and above 6 GHz) and utilization of massive antenna arrays provide additional degrees of freedom to substantially improve positioning accuracy. To support these NR-based positioning techniques, however, a UE needs a significant amount of assistance data from the network, some of which is not currently available. This can create various problems, issues, and/or difficulties for positioning based on NR radio technologies.

The document ERICSSON: "Spatial Relations and MAC CE",14 February 2020 (2020-02-14) discloses spatial relations between a specified DL RS and a specified UL RS for positioning.

The document WO 2019/159024 A1 (ERICSSON TELEFON AB L M [SE]) 22 August 2019 discloses systems and methods for Semi-Persistent Sounding Reference Signal (SP SRS) resource activation or deactivation.

The document QUALCOMM INCORPORATED: "Semi-persistent and aperiodic SRS-for-positioning", 14 February 2020 discusses a NRPPa procedure to enable an LMF to request activation and deactivation of semi-persistent and aperiodic SRS-for-positioning resource sets from a gNB.

### SUMMARY

Embodiments of the present disclosure provide specific improvements to positioning of user equipment (UEs) in a wireless network, such as by facilitating solutions to overcome the exemplary problems summarized above and described in more detail below.

Embodiments of the present disclosure include methods (e.g., procedures) for a positioning node (e.g., E-SMLC, LMF, etc.) coupled to a radio access network (RAN). These exemplary methods can include determining first spatial relations between downlink reference signals (DL-RS) and uplink reference signals (UL-RS) used for positioning in a first cell served by a first RAN node, wherein the first cell is a serving cell for a user equipment (UE). These exemplary methods can also include determining second spatial relations between DL-RS and UL-RS used for positioning in one or more second cells served by the second RAN node, wherein the second cells are neighbor cells to the first cell. These exemplary methods can also include configuring the UE to transmit UL-RS according to the first and second spatial relations.

In some embodiments, the configuring operations can include sending a request, to the first RAN node, to configure the UE to transmit UL-RS according to the first and second spatial relations. The request includes the first and second spatial relations. In some of these embodiments, the configuring operations can also include receiving, from the first RAN node, a response including an indication that the UE has been configured to transmit the UL-RS according to the determined spatial relations. In some variants, the response can also include one or more of the following:
- identification of UL-RS configurations that were accepted by the UE;
- the first or second spatial relation that corresponds to each UL-RS configuration that was accepted by the UE;
- an indication that the UE will transmit UL-RS according to at least two UL-RS configurations using substantially the same transmit antenna configuration; and
- an indication that the UE has rejected an UL-RS configurations because it would require using substantially the same transmit antenna configuration as another UL-RS configuration.

In some of these embodiments, these exemplary methods can also include sending, to the second RAN node, a notification that the UE is configured to transmit UL-RS according to the second spatial relations associated with the second cells.

In some embodiments, the first spatial relations and the second spatial relations are associated with respective DL-RS. For each DL-RS that is a synchronization signal/PBCH block (SSB), the associated first or second spatial relation includes a cell identifier and an SSB index. For each DL-RS that is a positioning reference signal (PRS), the associated first or second spatial relation includes a transmission reception point (TRP) identifier and a PRS resource set identifier.

In some embodiments, these exemplary methods can also include receiving, from the first RAN node, first configuration information for DL-RS and UL-RS used for positioning in the first cell; and receiving, from the second RAN node, second configuration information for DL-RS and UL-RS used for positioning in the one or more second cells. In such embodiments, determining the first spatial relations can be based on the first configuration information, and determining the second spatial relations can be based on the second configuration information.

In some embodiments, these exemplary methods can also include receiving at least one of the following information:
- first measurements, by the UE, of DL-RS associated with the first cell,
- second measurements, by the UE, of DL-RS associated with the second cells,
- third measurements, by one or more other UEs, of DL-RS associated with the first cell,
- fourth measurements, by one or more other UEs, of DL-RS associated with the second cells, and
- an indication the UE's UL signal transmission capabilities.

In such embodiments, determining at least one of the first and second spatial relations can be based on the received information. For example, the first measurements can be used for determining the first spatial relations and the second measurements can be used for determining the second spatial relations. In some variants, the first and second measurements can be positioning measurements, received from the UE. In other variants, the first and second measurements can be received from the first RAN node and can include at least one of the following: radio resource management (RRM) measurements and beam sweep measurements.

In some embodiments, these exemplary methods can also include receiving, from the first RAN node, first positioning measurements of UL-RS transmitted by the UE according to at least one of the first spatial relations; and receiving, from the second RAN node, second positioning measurements of UL-RS transmitted by the UE according to at least one of the second spatial relations. In some of these embodiments, these exemplary methods can also include estimating the UE's geographic location based on the first and second positioning measurements.

Other embodiments include methods (e.g., procedures) for a first RAN node (e.g., base station, eNB, gNB, etc. or component thereof such as a CU or DU) configured to support positioning in the RAN. These exemplary methods can include receiving, from a positioning node, a request to configure a user equipment (UE) to transmit uplink reference signals (UL-RS) for positioning according to first and second spatial relations. The request can include the first and second spatial relations. The first spatial relations are between downlink reference signals (DL-RS) and UL-RS used for positioning in a first cell served by the first RAN node, where the first cell is a serving cell for the UE. The second spatial relations are between DL-RS and UL-RS used for positioning in one or more second cells served by a second RAN node, where the second cells are neighbor cells to the first cell. These exemplary methods can also include determining a plurality of UL-RS configurations corresponding to the first and second spatial relations and configuring the UE to transmit UL-RS according to determined UL-RS configurations.

In some embodiments, these exemplary methods can also include sending, to the positioning node, first configuration information for DL-RS and UL-RS used for positioning in the first cell.

In some embodiments, the determining operations can include selecting UL-RS configurations corresponding to a subset of the first and second spatial relations. In such embodiments, the selected subset can be based on various factors including available UL signal resources in the first cell and/or the one or more second cells, UL configuration capabilities of the UE, etc.

In some embodiments, the determined UL-RS configurations can include the first and second spatial relations. In such embodiments, the configuring operations can include sending, to the UE, a configuration message including the first and second spatial relations. In some embodiments, the configuring operations can include receiving, from the UE, a first response including one or more of the following:
- identification of the determined UL-RS configurations that were accepted by the UE;
- an indication that the UE will transmit UL-RS according to at least two of the determined UL-RS configurations using substantially the same transmit antenna configuration; and
- an indication that the UE has rejected one of the determined UL-RS configurations because it would require using substantially the same transmit antenna configuration as another one of the determined UL-RS configurations.

In some embodiments, these exemplary methods can also include sending, to the positioning node, a second response indicating that the UE has been configured to transmit the UL-RS according to the first and second spatial relations. In some embodiments, the second response can also include one or more of the following:
- identification of the determined UL-RS configurations that were accepted by the UE;
- the first or second spatial relation that corresponds to each determined UL-RS configuration that was accepted by the UE;
- an indication that the UE will transmit UL-RS according to at least two of the determined UL-RS configurations using substantially the same transmit antenna configuration; and
- an indication that the UE has rejected one of the determined UL-RS configurations because it would require using substantially the same transmit antenna configuration as another one of the determined UL-RS configurations.

In some embodiments, these exemplary methods can also include performing positioning measurements of UL-RS transmitted by the UE according to the determined UL-RS configurations corresponding to first spatial relations; and sending the positioning measurements to the positioning node. In some embodiments, performing the measurements can include combining measurements of UL-RS transmitted by the UE according to two different UL-RS configurations based on the same UE transmit antenna configuration.

In some embodiments, these exemplary methods can also include receive, from the positioning node, a request for the UE to perform at least one of the following measurements:
- radio resource management (RRM) measurements on DL-RS associated with the first cell;
- beam sweep measurements on DL-RS associated with the first cell;
- RRM measurements on DL-RS associated with the second cells; and
- beam sweep measurements on DL-RS associated with the second cells.
Additionally, the first RAN node can obtain the requested measurements from the UE and send, to the positioning node, a response including the requested measurements.

Other embodiments include methods (e.g., procedures) for a user equipment (UE, e.g., wireless device, MTC device, IoT device, etc. or components thereof) configured to support positioning in a radio access network (RAN). These exemplary methods can include receiving, from a first RAN node, a plurality of UL-RS configurations corresponding to first and second spatial relations. The UL-RS configurations can include the first and second spatial relations. The first spatial relations are between DL-RS and UL-RS used for positioning in a first cell served by the first RAN node, where the first cell is a serving cell for the UE. The second spatial relations are between DL-RS and UL-RS used for positioning in one or more second cells served by a second RAN node, where the second cells are neighbor cells to the first cell. These exemplary methods can also include determining transmit antenna configurations corresponding to the respective UL-RS configurations; and transmitting UL-RS according to the respective UL-RS configurations and the corresponding transmit antenna configurations.

In some embodiments, these exemplary methods can also include performing measurements that include first measurements of DL-RS associated with the first cell and/or second measurements of DL-RS associated with the second cells; and sending the measurements to the first RAN node or to a positioning node. In some of these embodiments, the first and/or second measurements are positioning measurements and are sent to the positioning node. In other of these embodiments, the first and/or second measurements are sent to the first RAN node and are radio resource management (RRM) and/or beam sweep measurements.

In some embodiments, the determining operations can include for each received UL-RS configuration, determining a receive antenna configuration for a DL-RS associated with the spatial relation included in the UL-RS configuration and, based on the spatial relation, determining a transmit antenna configuration that results in a transmit beam that is directionally aligned with a receive beam resulting from the receive antenna configuration.

In some of these embodiments, at least two of the transmit antenna configurations can be substantially the same. In such embodiments, these exemplary methods can also include sending, to the first RAN node, a response including one or more of the following:
- identification of the UL-RS configurations that were accepted by the UE;
- an indication that the UE will transmit UL-RS according to at least two of the UL-RS configurations using substantially the same transmit antenna configuration; and
- an indication that the UE has rejected one of the UL-RS configurations because it would require using substantially the same transmit antenna configuration as another one of the UL-RS configurations.

In some embodiments, the transmitting operations can include transmitting one or more first UL-RS based on respective one or more first spatial relations associated with the first cell; and transmitting one or more second UL-RS based on respective one or more second spatial relations associated with the second cells.

Other embodiments include positioning nodes (e.g., E-SMLC, LMF, etc.), RAN nodes (e.g., base stations, eNBs, gNBs, ng-eNBs, etc. or components thereof), and user equipment (UEs, e.g., wireless devices, IoT devices, etc. or components thereof) configured to perform operations corresponding to any of the exemplary methods described herein. Other embodiments include non-transitory, computer-readable media storing program instructions that, when executed by processing circuitry, configure such positioning nodes, RAN nodes, or UEs to perform operations corresponding to any of the exemplary methods described herein.

These and other objects, features, and advantages of embodiments of the present disclosure will become apparent upon reading the following Detailed Description in view of the Drawings briefly described below.

### BRIEF DESCRIPTION OF THE DRAWINGS

Figure 1 is a high-level illustration of an exemplary architecture of the Long-Term Evolution (LTE) Evolved UTRAN (E-UTRAN) and Evolved Packet Core (EPC) network.
Figure 2 is a high-level illustration of exemplary protocol layers of the control-plane portion of the radio interface between a user equipment (UE) and the E-UTRAN.
Figures 3-4 show two views of an exemplary positioning architecture for an LTE network.
Figure 5 illustrates a high-level view of a 5G network architecture
Figure 6 shows an exemplary positioning architecture within an NR network.
Figure 7 shows an exemplary hybrid transmit beamforming arrangement.
Figure 8 shows two exemplary beam sweeping arrangements involving two subarrays (Figure 8A) and three subarrays (Figure 8B).
Figure 9, which includes Figures 9A-9D, shows an ASN.1 data structure for an exemplary *SRS-Config* information element (IE).
Figure 10 shows a flow diagram of an exemplary procedure for configuring and utilizing spatial relations between downlink and uplink reference signals used for positioning, according to various exemplary embodiments of the present disclosure.
Figure 11 shows a flow diagram of an exemplary method (e.g., procedure) for a positioning node (e.g., E-SMLC, LMF, etc.), according to various exemplary embodiments of the present disclosure.
Figure 12 shows a flow diagram of an exemplary method (e.g., procedure) for a first radio access network (RAN) node (e.g., base station, eNB, gNB, ng-eNB, etc. or component thereof), according to various exemplary embodiments of the present disclosure.
Figure 13 shows a flow diagram of an exemplary method (e.g., procedure) for a user equipment (UE, e.g., wireless device, IoT device, etc. or component thereof), according to various exemplary embodiments of the present disclosure.
Figure 14 is a block diagram of an exemplary wireless device or UE according to various exemplary embodiments of the present disclosure.
Figure 15 is a block diagram of an exemplary network node according to various exemplary embodiments of the present disclosure.
Figure 16 is a block diagram of an exemplary network configured to provide over-the-top (OTT) data services between a host computer and a UE, according to various exemplary embodiments of the present disclosure.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided as examples to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, *etc.* are to be interpreted openly as referring to at least one instance of the element, apparatus, component, means, step, *etc.,* unless explicitly stated otherwise. The steps of any methods and/or procedures disclosed herein do not have to be performed in the exact order disclosed, unless a step is explicitly described as following or preceding another step and/or where it is implicit that a step must follow or precede another step. Any feature of any of the embodiments disclosed herein can be applied to any other embodiment, wherever appropriate. Likewise, any advantage of any of the embodiments can apply to any other embodiments, and vice versa. Other objects, features, and advantages of the enclosed embodiments will be apparent from the following description.

Furthermore, the following terms are used throughout the description given below:
- Radio Node: As used herein, a "radio node" can be either a "radio access node" or a "wireless device."
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station (*e*.*g*., a New Radio (NR) base station (gNB) in a 3GPP Fifth Generation (5G) NR network or an enhanced or evolved Node B (eNB) in a 3GPP LTE network), base station distributed components (*e*.*g*., CU and DU), a high-power or macro base station, a low-power base station (*e*.*g*., micro, pico, femto, or home base station, or the like), an integrated access backhaul (IAB) node, a transmission point, a transmission reception point (TRP), a remote radio unit (RRU or RRH), a relay node, or a non-terrestrial access node (e.g., satellite or gateway). For example, a multi-TRP arrangement may include more than one TRP associated with one or more radio access nodes.
- Core Network Node: As used herein, a "core network node" is any type of node in a core network. Some examples of a core network node include, *e.g.,* a Mobility Management Entity (MME), a serving gateway (SGW), a Packet Data Network Gateway (P-GW), an access and mobility management function (AMF), a session management function (AMF), a user plane function (UPF), a Service Capability Exposure Function (SCEF), or the like.
- Wireless Device: As used herein, a "wireless device" (or "WD" for short) is any type of device that has access to (*i.e.,* is served by) a cellular communications network by communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Some examples of a wireless device include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, *etc.* Unless otherwise noted, the term "wireless device" is used interchangeably herein with the term "user equipment" (or "UE" for short).
- Network Node: As used herein, a "network node" is any node that is either part of the radio access network (*e*.*g*., a radio access node or equivalent name discussed above) or of the core network (*e*.*g*., a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (e.g., administration) in the cellular communications network.
- Channel: As used herein, "channel" can refer to a logical, transport, physical, or propagation channel, with the specific meaning being derived from the context in which the term is used. A channel may comprise and/or be arranged on one or more carriers, e.g., a plurality of subcarriers. A channel carrying and/or for carrying control signaling/control information may be considered a control channel, in particular if it is a physical layer channel and/or if it carries control plane information. Analogously, a channel carrying - and/or for carrying - data signaling/user information may be considered a data channel (e.g., PDSCH), in particular if it is a physical layer channel and/or if it carries user plane (UP) information. A channel may be defined for a specific communication direction, or for two complementary communication directions (e.g., UL and DL, or sidelink in two directions), in which case it may be considered to have two component channels, one for each direction.

Note that the description herein focuses on a 3GPP cellular communications system and, as such, 3GPP-specific terminology (or equivalent) is often used. However, the concepts disclosed herein are not limited to a 3GPP system and can be applied to any wireless system having appropriate and/or relevant functionality. Furthermore, although the term "cell" is used herein, it should be understood that (particularly with respect to 5G NR) beams may be used instead of cells and, as such, concepts described herein apply equally to both cells and beams.

As briefly mentioned, NR operation in low and high frequency bands (i.e., below and above 6GHz) and utilization of massive antenna arrays provide additional degrees of freedom to substantially improve positioning accuracy. To support these NR-based positioning techniques, however, a UE needs a significant amount of assistance data from the network, some of which is not currently available. This can create various problems, issues, and/or difficulties for positioning based on NR radio technologies. These issues are discussed in more detail below.

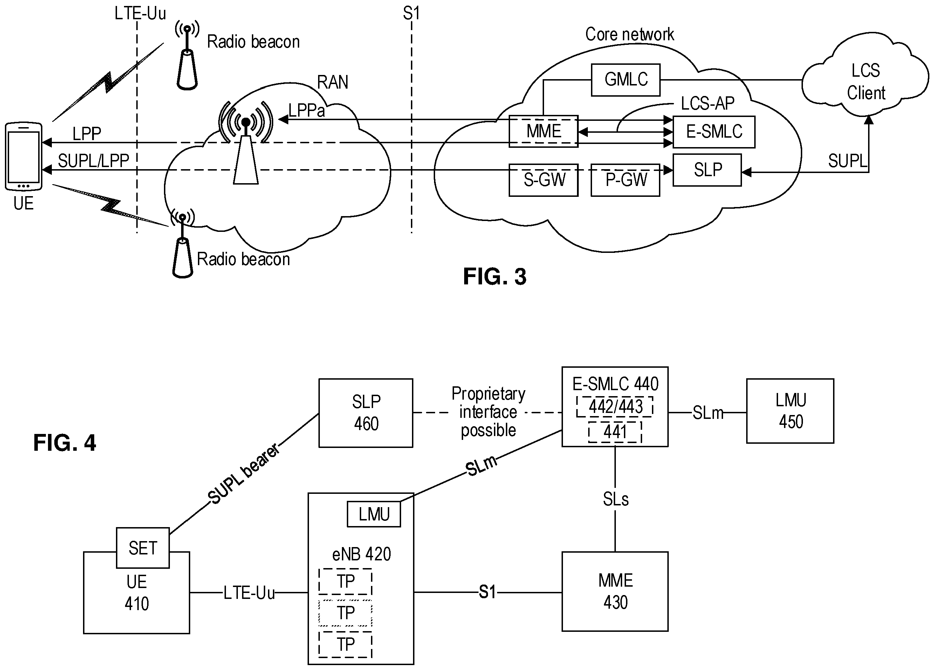

Figure 3 shows an exemplary positioning architecture within an LTE network. Three important functional elements of the LTE positioning architecture are the LCS Client, the LCS target and the LCS Server. The LCS Server is a physical or logical entity (e.g., as embodied by the E-SMLC or SLP in Figure 3) managing positioning for an LCS target (e.g., as embodiments by the UE in Figure 3) by collecting measurements and other location information, assisting the terminal in measurements when necessary, and estimating the LCS target location. An LCS Client is a software and/or hardware entity that interacts with an LCS Server for the purpose of obtaining location information for one or more LCS targets (i.e., the entities being positioned) such as the UE in Figure 3. LCS Clients may also reside in the LCS targets themselves. An LCS Client sends a request to an LCS Server to obtain location information, and the LCS Server processes and serves the received requests and sends the positioning result and optionally a velocity estimate to the LCS Client. A positioning request can be originated from the terminal or a network node or external client.

In the LTE architecture shown in Figure 3, position calculation can be conducted, for example, by the LCS Server (e.g., E-SMLC or SLP) or by the LCS target (e.g., a UE). The former approach corresponds to the UE-assisted positioning mode when it is based on UE measurements, whilst the latter corresponds to the UE-based positioning mode. The following positioning methods are supported in LTE:
- Enhanced Cell ID (E-CID). Utilizes information to associate the UE with the geographical area of a serving cell, and then additional information to determine a finer granularity position. The following measurements are supported for E-CID: AoA (base station only), UE Rx-Tx time difference, timing advance (TA) types 1 and 2, reference signal received power (RSRP), and reference signal received quality (RSRQ).
- Assisted GNSS. GNSS information retrieved by the UE, supported by assistance information provided to the UE from the E-SMLC.
- OTDOA (Observed Time Difference of Arrival). The UE receives and measures Global Navigation Satellite System (GNSS) signals, supported by assistance information provided to the UE from E-SMLC.
- UTDOA (Uplink TDOA). The UE is requested to transmit a specific waveform that is detected by multiple location measurement units (LMUs, which may be standalone, co-located or integrated into an eNB) at known positions. These measurements are forwarded to the E-SMLC for multilateration.

In addition, one or more of the following positioning modes can be utilized in each of the positioning methods listed above:
- UE-Assisted: The UE performs measurements with or without assistance from the network and sends these measurements to the E-SMLC where the position calculation may take place.
- UE-Based: The UE performs measurements and calculates its own position with assistance from the network.
- Standalone: The UE performs measurements and calculates its own position without network assistance.
The detailed assistance data may include information about network node locations, beam directions, etc. The assistance data can be provided to the UE via unicast or via broadcast.

Figure 4 shows another view of an exemplary positioning architecture in an LTE network. For example, Figure 4 illustrates how secure user plane location (SUPL) techniques can be supported in LTE networks. In general, SUPL is run on top of the generic LTE user-plane protocol stack. The SUPL solution includes a location server - known as SUPL location platform, SLP (460) - that communicates with a SUPL-enabled terminal (SET), which can be software and/or hardware components of a UE. The SLP also may have a proprietary interface to the E-SMLC (440), which is the location server for control-plane positioning in LTE.

The E-SMLC can communicate with location measurement units (LMUs) via SLm interfaces. As shown in Figure 4, LMUs can be standalone (e.g., LMU 450) or integrated with an eNB 420. An eNB also may include, or be associated with, one or more transmission points (TPs). The E-SMLC communicates to UEs (e.g., UE 410) via the serving MME (430) and eNB, using the respective SLs, S1, and Uu interfaces shown in Figure 4. Although not shown, the RRC protocol is used to carry positioning-related information (e.g., to/from E-SMLC) between the UE and the eNB.

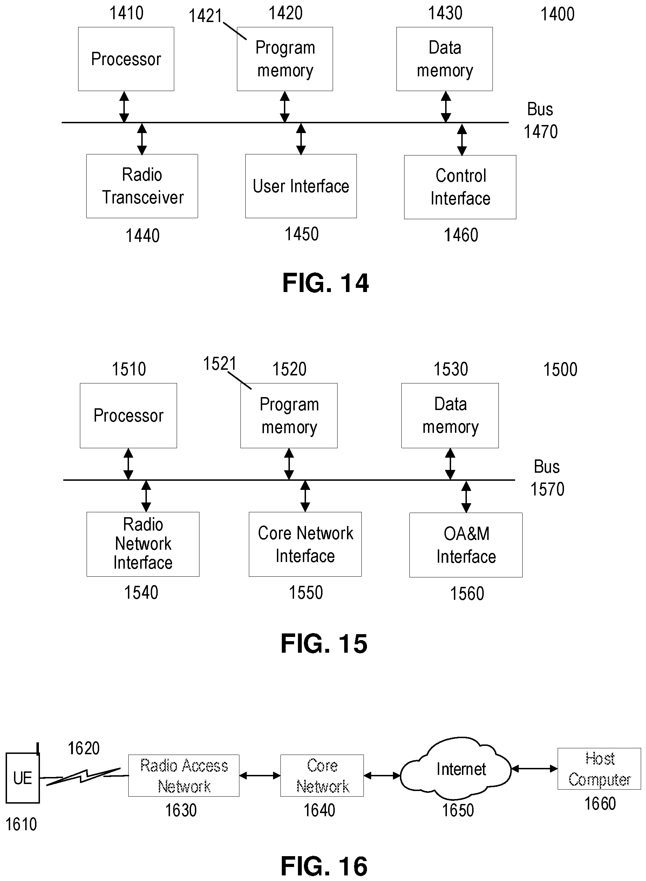

E-SMLC 440 can also include, or be associated with, various processing circuitry 442, by which the E-SMLC performs various operations described herein. Processing circuitry 442 can include similar types of processing circuitry as described herein in relation to other network nodes (*see, e.g.,* description of Figure 15). E-SMLC 440 can also include, or be associated with, a non-transitory computer-readable medium 443 storing instructions (also referred to as a computer program product) that can facilitate operations of processing circuitry 442. Medium 443 can include similar types of computer memory as described herein in relation to other network nodes (*see, e.g.,* description of Figure 15). Additionally, E-SMLC 440 can include various communication interface circuitry 441, which can be used, e.g., for communication via the SLs interface.

Positioning Reference Signals (PRS) were introduced in LTE Rel-9 for antenna port 6 because cell-specific reference signals (CRS) were insufficient for positioning. In particular, CRS could not guarantee the required high probability of detection. In general, a neighbor cell's synchronization signals (PSS/SSS) and reference signals are generally detectable by a UE when the Signal-to-Interference-and-Noise Ratio (SINR) is at least -6 dB.

Nevertheless, simulations during 3GPP standardization have shown that detection can be only guaranteed for 70% of all cases for the third-best detected cell, meaning that in at least 30% of cases only two neighboring cells are detected. Moreover, the simulations assumed an interference-free environment that is generally unobtainable in a real-world scenario. However, PRS have some similarities with CRS. In particular, PRS is a pseudo-random QPSK sequence that is mapped in diagonal patterns with shifts in frequency and time to avoid collision with CRS and an overlap with the control channels (PDCCH).

Fifth-generation (5G) New Radio (NR) technology shares many similarities with fourth-generation LTE. For example, NR uses CP-OFDM (Cyclic Prefix Orthogonal Frequency Division Multiplexing) in the DL and both CP-OFDM and DFT-spread OFDM (DFT-S-OFDM) in the UL. As another example, in the time domain, NR DL and UL physical resources are organized into equal-sized 1-ms subframes. A subframe is further divided into multiple slots of equal duration, with each slot including multiple OFDM-based symbols. As another example, NR RRC layer includes RRC_IDLE and RRC_CONNECTED states, but adds an additional state known as RRC _INACTIVE, which has some properties similar to a "suspended" condition used in LTE.

In addition to providing coverage via "cells," as in LTE, NR networks also provide coverage via "beams." In general, a DL "beam" is a coverage area of a network-transmitted RS that may be measured or monitored by a UE. In NR, for example, such RS can include any of the following, alone or in combination: synchronization signal/PBCH block (SSB), CSI-RS, tertiary reference signals (or any other sync signal), positioning RS (PRS), DMRS, phase-tracking reference signals (PTRS), *etc.* In general, SSB is available to all UEs regardless of RRC state, while other RS (*e.g.,* CSI-RS, DM-RS, PTRS) are associated with specific UEs that have a network connection, *i*.*e*., in RRC_CONNECTED state.

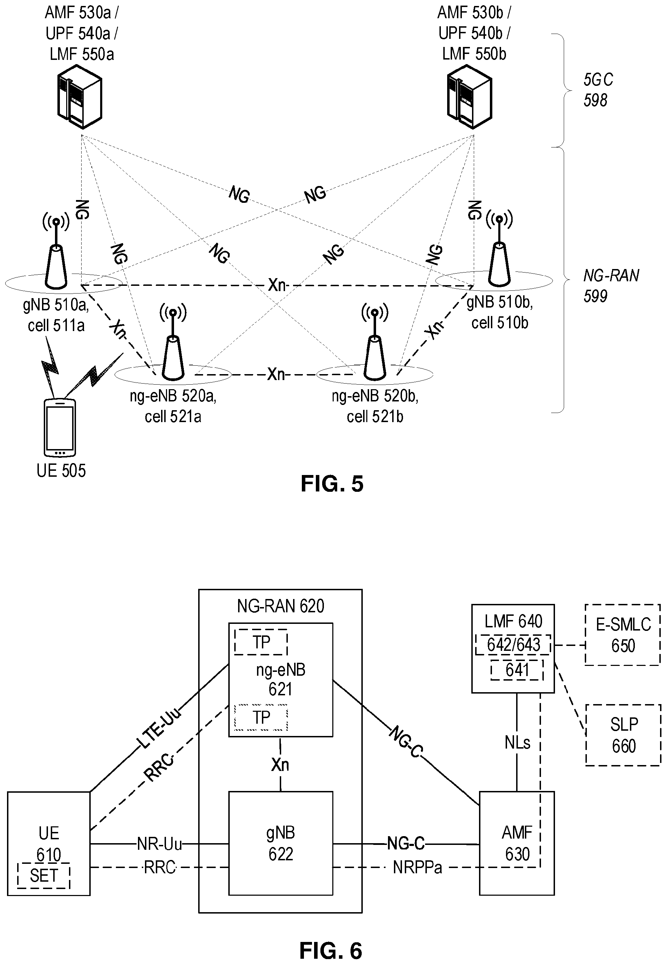

As mentioned above, positioning is also expected to be an important application in 5G/NR networks. Figure 5 shows a high-level view of an exemplary 5G network architecture, including a Next Generation Radio Access Network (NG-RAN) 599 and a 5G Core (5GC) 598. As shown in the figure, NG-RAN 599 can include gNBs 510 (*e.g.,* 510a,b) and ng-eNBs 520 (*e.g.,* 520a,b) that are interconnected with each other via respective Xn interfaces. The gNBs and ng-eNBs are also connected via the NG interfaces to 5GC 598, more specifically to the AMF (Access and Mobility Management Function) 530 (*e.g.,* AMFs 530a,b) via respective NG-C interfaces and to the UPF (User Plane Function) 540 (*e*.*g*., UPFs 540a,b) via respective NG-U interfaces. In some embodiments, 5GC 598 can also include one or more Location Management Functions (LMFs, e.g., LMF 550a,b), which are described in more detail below.

NG-RAN 599 is layered into a Radio Network Layer (RNL) and a Transport Network Layer (TNL). The NG-RAN architecture, *i*.*e*., the NG-RAN logical nodes and interfaces between them, is defined as part of the RNL. For each NG-RAN interface (NG, Xn, F1) the related TNL protocol and the functionality are specified. The TNL provides services for user plane transport and signaling transport. In some exemplary configurations, each gNB can be connected to all 5GC nodes within an "AMF Region," which is defined in 3GPP TS 23.501. If security protection for CP and UP data on TNL of NG-RAN interfaces is supported, NDS/IP can be applied, as defined in 3GPP TS 33.501.

Each of the gNBs 510a,b can support the NR radio interface, including frequency division duplexing (FDD), time division duplexing (TDD), or a combination thereof. In contrast, each of ng-eNBs 520a,b supports the LTE radio interface but, unlike conventional LTE eNBs (*e*.*g*., eNBs 105-115 shown in Figure 1), connect to the 5GC via the NG interface. In addition, the gNBs 510a,b and ng-eNBs 520a,b can provide multi-RAT (radio access technology) dual connectivity (MR-DC) to UEs as described above, including NG-RAN E-UTRA/NR Dual Connectivity (NGEN-DC).

Each of the gNBs and ng-eNBs can serve a geographic coverage area including one more cells, including exemplary cells 511a-b and 521a-b shown in Figure 5. As mentioned above, the gNBs and ng-eNBs can also use various directional beams to provide coverage in the respective cells. Depending on the particular cell in which it is located, a UE 505 can communicate with the gNB or ng-eNB serving that particular cell via the NR or LTE radio interface, respectively.

Each of the gNBs 510a,b can include a central (or centralized) unit (CU or gNB-CU) and one or more distributed (or decentralized) units (DU or gNB-DU). A CU connects to DUs over respective F1 logical interfaces. The CU and connected DUs are only visible to other gNBs and the 5GC as a gNB, *e*.*g*., the F1 interface is not visible beyond gNB-CU. Each of the CUs and DUs can include various circuitry needed to perform their respective functions, including processing circuitry, transceiver circuitry (*e*.*g*., for communication), and power supply circuitry. Moreover, the terms "central unit" and "centralized unit" are used interchangeably herein, as are the terms "distributed unit" and "decentralized unit."

CUs can host higher-layer protocols and perform various gNB functions such controlling the operation of DUs. For example, a CU can host higher-layer protocols such as, e.g., F1 application part protocol (FLAP), Stream Control Transmission Protocol (SCTP), GPRS Tunneling Protocol (GTP), Packet Data Convergence Protocol (PDCP), User Datagram Protocol (UDP), Internet Protocol (IP), and Radio Resource Control (RRC) protocol. Likewise, DUs can host lower-layer protocols and can include various subsets of the gNB functions, depending on the functional split. For example, a DU can host lower-layer protocols such as, Radio Link Control (RLC), Medium Access Control (MAC), and physical-layer (PHY) protocols.

Figure 6 is a block diagram illustrating a high-level architecture for supporting UE positioning in NR networks. In Figure 6, NG-RAN 620 can include nodes such as gNB 622 and ng-eNB 621, similar to the architecture shown in Figure 5. Each ng-eNB may control several transmission points (TPs), such as remote radio heads. Moreover, some TPs can be "PRS-only" for supporting positioning reference signal (PRS)-based TBS for E-UTRAN operation.

In addition, the NG-RAN nodes communicate with an AMF 630 in the 5GC via respective NG-C interfaces (both of which may or may not be present), while the AMF and LMF 640 communicate via an NLs interface. In addition, positioning-related communication between UE 610 and the NG-RAN nodes occurs via the RRC protocol, while positioning-related communication between NG-RAN nodes and LMF occurs via an NRPPa protocol. Optionally, the LMF can also communicate with an E-SMLC 650 in an LTE network, such as illustrated in Figure 4.

LMF 640 can also include, or be associated with, various processing circuitry 642, by which the LMF performs various operations described herein. Processing circuitry 642 can include similar types of processing circuitry as described herein in relation to other network nodes (*see, e.g.,* description of Figure 15). LMF 640 can also include, or be associated with, a non-transitory computer-readable medium 643 storing instructions (also referred to as a computer program product) that can facilitate the operations of processing circuitry 642. Medium 643 can include similar types of computer memory as described herein in relation to other network nodes (*see, e.g.,* description of Figure 15). Additionally, LMF 640 can include various communication interface circuitry 641, which can be used, e.g., for communication via the NLs interface.

In a typical operation, the AMF can receive a request for a location service associated with a particular target UE from another entity (e.g., a gateway mobile location center (GMLC)), or the AMF itself can initiate some location service on behalf of a particular target UE (e.g., for an emergency call from the UE). The AMF then sends a location services (LS) request to the LMF. The LMF processes the LS request, which may include transferring assistance data to the target UE to assist with UE-based and/or UE-assisted positioning; and/or positioning of the target UE. The LMF then returns the result of the LS (e.g., a position estimate for the UE and/or an indication of any assistance data transferred to the UE) to the AMF or to another entity (e.g., GMLC) that requested the LS.

An LMF may have a signaling connection to an E-SMLC, enabling the LMF to access information from E-UTRAN, e.g., to support E-UTRA OTDOA positioning using downlink measurements obtained by a target UE. An LMF can also have a signaling connection to an SLP, the LTE entity responsible for user-plane positioning.

Various interfaces and protocols are used for, or involved in, NR positioning. The LTE Positioning Protocol (LPP) is used between a target device (e.g., UE in the control-plane, or SET in the user-plane) and a positioning server (e.g., LMF in the control-plane, SLP in the user-plane). LPP can use either the control- or user-plane protocols as underlying transport. NRPP is terminated between a target device and the LMF. RRC protocol is used between UE and gNB (via NR radio interface) and between UE and ng-eNB (via LTE radio interface).

Furthermore, the NR Positioning Protocol A (NRPPa) carries information between the NG-RAN Node and the LMF, and is transparent to the AMF. As such, the AMF routes the NRPPa PDUs transparently (e.g., without knowledge of the involved NRPPa transaction) over NG-C interface based on a Routing ID corresponding to the involved LMF. More specifically, the AMF carries the NRPPa PDUs over NG-C interface either in UE associated mode or non-UE associated mode. The NGAP protocol between the AMF and an NG-RAN node (e.g., gNB or ng-eNB) is used as transport for LPP and NRPPa messages over the NG-C interface. NGAP is also used to instigate and terminate NG-RAN-related positioning procedures.

LPP/NRPP are used to deliver messages such as positioning capability request, OTDOA positioning measurements request, and OTDOA assistance data to the UE from a positioning node (e.g., location server). LPP/NRPP are also used to deliver messages from the UE to the positioning node including, e.g., UE capability, UE measurements for UE-assisted OTDOA positioning, UE request for additional assistance data, UE configuration parameter(s) to be used to create UE-specific OTDOA assistance data, etc. NRPPa is used to deliver the information between ng-eNB/gNB and LMF in both directions. This can include LMF requesting some information from ng-eNB/gNB, and ng-eNB/gNB providing some information to LMF. For example, this can include information about PRS transmitted by ng-eNB/gNB that are to be used for OTDOA positioning measurements by the UE.

NR networks will support positioning methods similar to LTE E-CID, OTDOA, and UTDOA but based on NR measurements. NR may also support one or more of the following position methods:
- Multi-RTT: The device (e.g. UE) computes UE Rx-Tx time difference and gNBs compute gNB Rx-Tx time difference. The results are combined to find the UE position based upon round trip time (RTT) calculation.
- DL-AoD: gNB or LMF calculates the UE angular position based upon UE DL RSRP measurement results.
- UL-AoA: gNB calculates the UL AoA based upon measurements of a UE's UL SRS transmissions.

Each of the NR positioning methods can be supported in UE-assisted, UE-based or UE-standalone modes, similar to LTE discussed above. In NR Rel. 16, a WI is currently ongoing to specify extensive support for these various positioning techniques. This is expected to include a NR DL PRS based on a staggered comb RE pattern as well as extension of Rel-15 sounding reference signal (SRS) configurations for improved positioning support. Support for RSTD measurements that may be used for OTDOA is expected as well as multi cell UE RX-TX time difference measurements that can be used for Round Trip Time (RTT) estimation. Rich reporting of multiple CIR/correlation peaks has been discussed as well as reporting of the strongest CIR/correlation peak.

Recent advances in massive antenna systems (massive MIMO) can provide additional degrees of freedom to enable a more accurate user location estimation by exploiting spatial and angular domains of the propagation channel in combination with time measurements. These spatial techniques, also referred to as "beamforming", can be used on transmission beams and/or reception beams, by the network or by the UE.

Currently, two NR frequency ranges are explicitly distinguished in 3GPP: FR1 (below 6 GHz) and FR2 (above 6 GHz). It is known that high-frequency radio communication above 6 GHz suffers from significant path loss and penetration loss. One solution to address this issue is to deploy large-scale antenna arrays to achieve high beamforming gain, which is a reasonable solution due to the small wavelength of high-frequency signal. Such solutions are often referred to as multiple-input multiple-output (MIMO) or, in the case of large-scale antenna arrays anticipate for NR, massive MIMO. In particular, up to 64 beams are supported for FR2. In addition, it is expected that the greater number of antenna elements will also be used in FR1 to obtain more beamforming and multiplexing gain.

With massive MIMO, three approaches to beamforming have been discussed: analog, digital, and hybrid (a combination of analog and digital). Analog beamforming can compensate for high pathloss in NR scenarios, while digital precoding can provide additional performance gains (e.g., similar to MIMO for FR1) necessary to achieve a reasonable coverage. The implementation complexity of analog beamforming is significantly less than digital since it can utilize simple phase shifters, but it is limited in terms of multi-direction flexibility (i.e., a single beam can be formed at a time and the beams are then switched in time domain), transmission bandwidth (i.e., not possible to transmit over a sub-band), inaccuracies in the analog domain, etc.

Digital beamforming requires costly converters between the digital domain and the intermediate frequency (IF) radio domain. However, digital beamforming, which is often used today in LTE networks, provides the best performance in terms of data rate and multiplexing capabilities. For example, multiple beams over multiple sub-bands can be formed simultaneously. Even so, digital beamforming presents challenges in terms of power consumption, integration, and cost. Furthermore, while cost generally scales linearly with the number of transmit/receive units, the gains of digital beamforming increase more slowly.

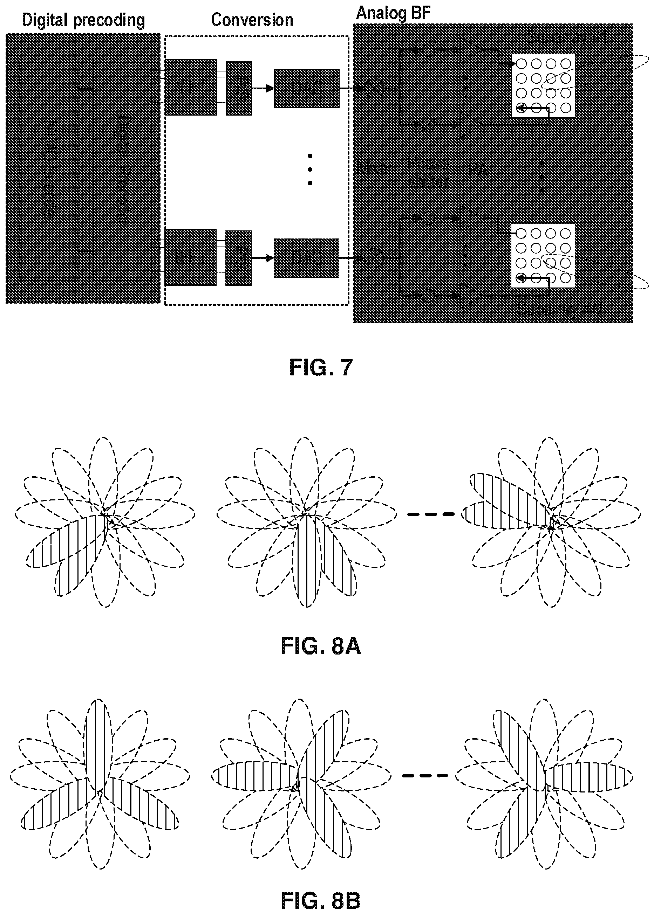

Hybrid beamforming, which provides cost benefits from analog beamforming and capacity benefits from digital beamforming, is therefore desirable for NR. Figure 7 shows an exemplary hybrid transmit (TX) beamforming arrangement, which includes a digital precoding section and an analog beamforming (BF) section that are coupled by intermediate conversion circuitry As shown in Figure 7, the analog BF portion includes independent analog circuitry for each of N subarrays of antenna elements. For each subarray, the analog circuitry includes mixers (e.g., from IF to RF), phase shifters, and power amplifiers (PAs). Each subarray can generate a beam separate from other subarrays. The conversion circuity includes independent IFFT modulators, parallel-to-serial converters (P/S), and digital-to-analog converters (DAC) for each of the N channels of the analog BF circuitry.

The analog beam of a subarray can be steered toward a single direction on each OFDM symbol, and hence the number of subarrays determines the number of beam directions and the corresponding coverage on each OFDM symbol. However, the number of beams to cover an entire served area is typically larger than the number of subarrays, especially when the individual beam-width is narrow. Therefore, to cover the entire served area, multiple transmissions with narrow beams steered differently in time domain are also likely to be needed. The provision of multiple narrow coverage beams for this purpose has been called "beam sweeping". Figure 8 shows two exemplary beam sweeping arrangements involving two subarrays (Figure 8A) and three subarrays (Figure 8B).

For analog and hybrid beamforming, beam sweeping can be very important for providing necessary coverage in NR networks. For this purpose, multiple OFDM symbols, in which differently steered beams can be transmitted through subarrays, can be assigned and periodically transmitted. In general, both RX and TX beam sweeping function in a similar manner at the base station side.

NR Rel-16 positioning will also support beamforming. The DL PRS is constructed as a DL PRS Resource set consisting of multiple DL PRS Resources. Each DL PRS Resource is transmitted over a separate beam. It has been decided in 3GPP RAN1 WG that an UL SRS can have a spatial relation to a DL PRS Resource as signaled through the combination of a DL PRS Resource set ID and a DL PRS Resource ID. The UE will then transmit the UL SRS using the same antenna panel as it uses to receive the corresponding DL PRS resource and using the same (reciprocal) beam as it uses to receive the DL PRS Resource.

NR has adopted the term "spatial relation" to refer to a relationship between an UL RS (e.g., PUCCH/PUSCH DMRS) and another RS, which can be either a DL RS (CSI-RS or SSB) or an UL RS (SRS). This is also defined from a UE perspective. If the UL RS is spatially related to a DL RS, it means that the UE should transmit the UL RS in the opposite (reciprocal) direction from which it received the corresponding DL RS. More precisely, the UE should apply the "same" Tx spatial filtering (or beamforming) configuration for transmitting the spatially-related UL RS as the Rx spatial filtering (or beamforming) configuration that it used for receiving the corresponding DL RS.

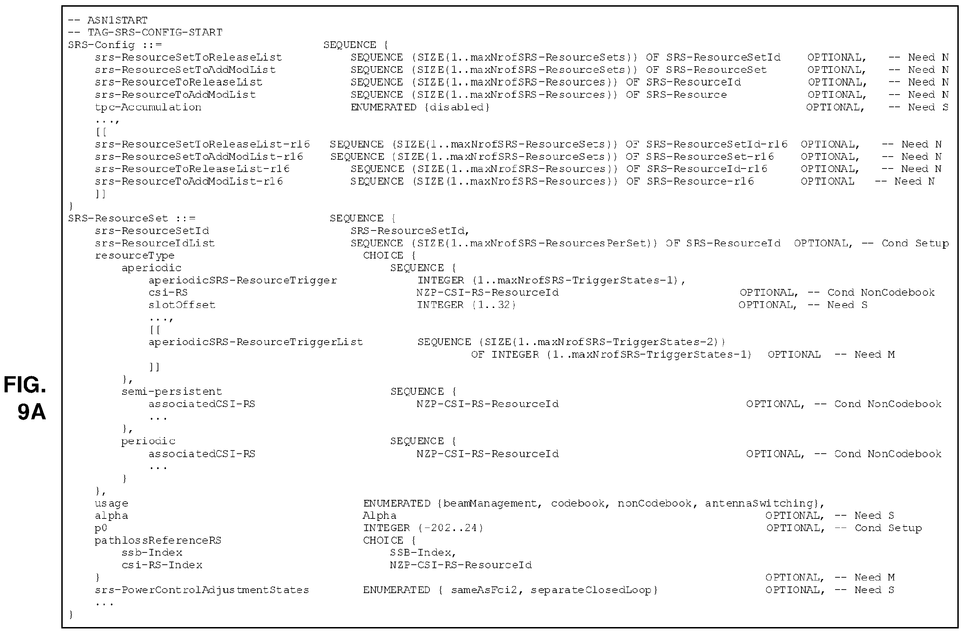

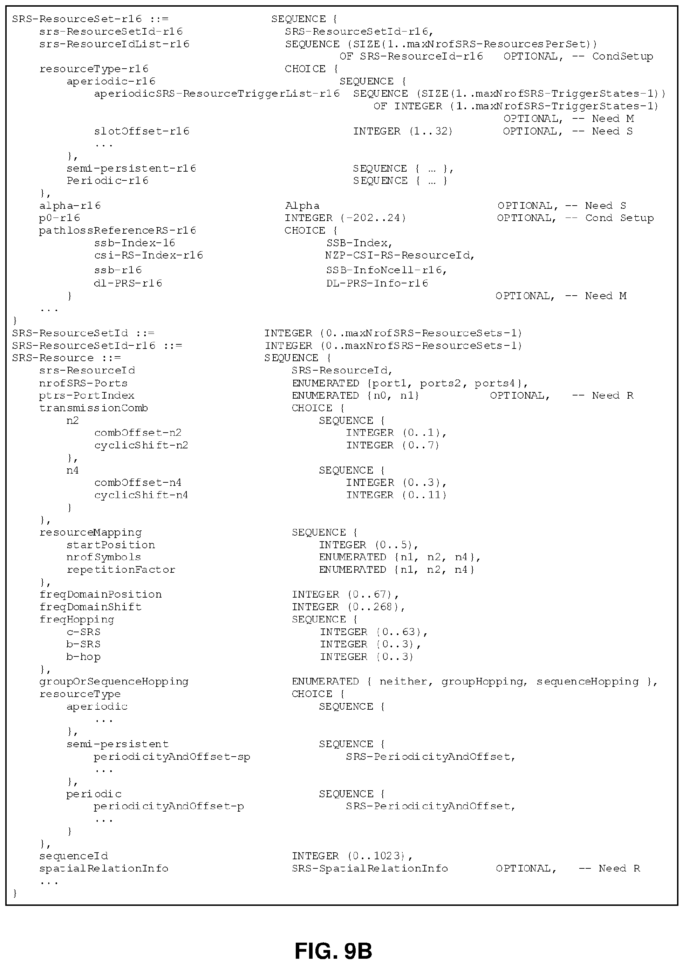

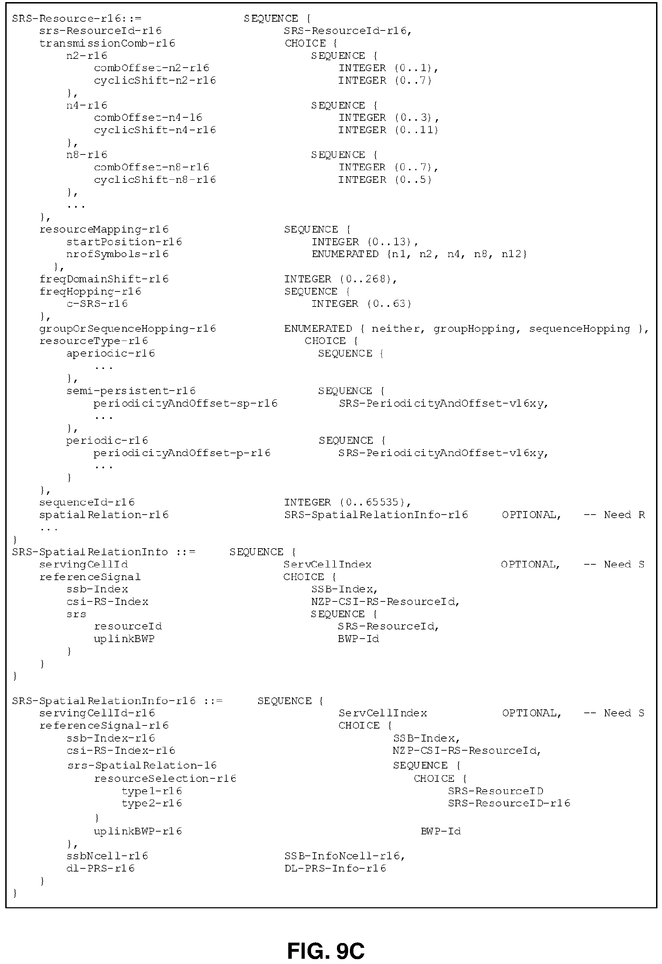

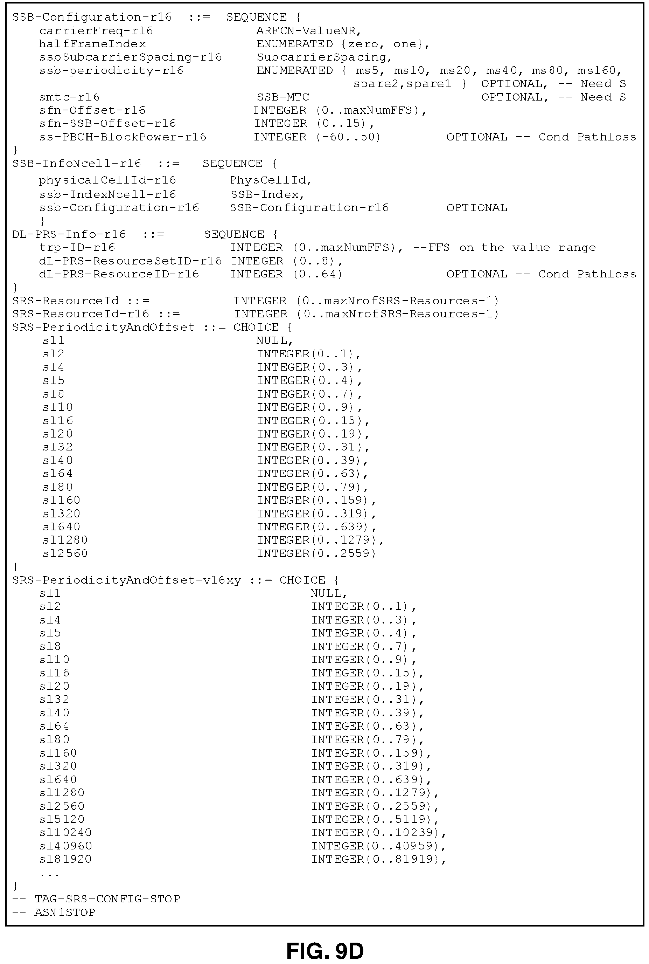

The RRC information element (IE) *SRS-Config* is used to configure SRS transmissions by a UE. The configuration defines a list of *SRS-Resources* and a list of *SRS ResourceSets.* Each resource set defines a set of *SRS-Resources.* The network triggers the transmission of a set of *SRS-Resources* using a configured *aperiodicSRS-ResourceTrigger* (L1 downlink control information, DCI). Figure 9, which includes Figures 9A-9D, shows an ASN.1 data structure for an exemplary *SRS-Config* IE. Note that to obtain the complete ASN.1 data structure, Figures 9A-9D are appended in sequential order as presented.

The *SRS-SpatialRelationInfo-r16* IE shown in Figure 9C defines spatial relations for the SRS configured by *SRS-Config* (with some fields defined in Figure 9D). As shown in Figure 9C, however, the *SRS-SpatialRelationInfo-r16* IE defines spatial relations only for the UE's serving cell with respect to DL SSB, CSI-RS and SRS. Positioning also requires measurements of neighbor cells, so spatial relations are also needed with respect to neighbor cells (e.g., TRPs). Furthermore, it would be beneficial to also have the capability for spatial relations between UL-SRS and DL-PRS since both are used for positioning purposes.

Embodiments of the present disclosure can address these and other problems, issues, and/or difficulties by providing novel, flexible, and efficient techniques for a positioning node (e.g., E-SLMC, LMF) to determine spatial relations from positioning configuration information provided by radio access network (RAN) nodes (e.g., gNBs) serving neighboring cells. The positioning node can then configure the RAN nodes with the determined spatial relations (e.g., via NRPPa signaling), which the RAN nodes can then use to configure UEs for positioning operations (e.g., via RRC signaling). Configured UEs can then use the spatial relations to determine and/or select appropriate antenna configurations for transmitting and/or receiving positioning-related signals (e.g., PRS). RAN node and/or UE measurements of the positioning-related signals can be reported to a positioning node, which can use such measurements to estimate the UE's geographic location.

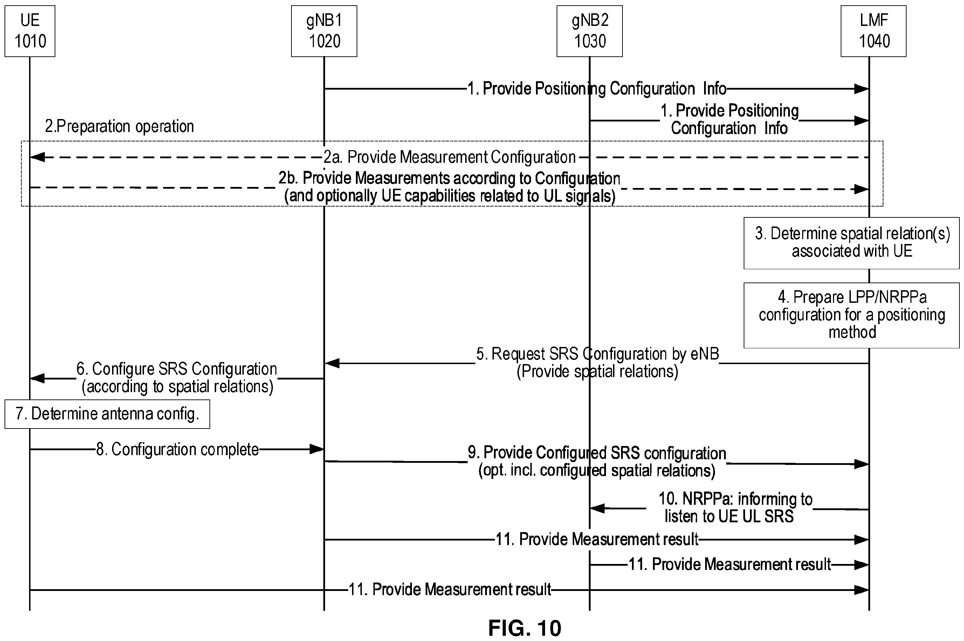

Figure 10 shows a signal flow diagram of an exemplary procedure for determining and configuring spatial relations for positioning-related signals, according to various exemplary embodiments of the present disclosure. Although Figure 10 shows operations with numerical labels, these labels are intended to facilitate the following explanation and do not require the operations to be performed in an order corresponding to their numerical labels. In other words, unless specifically noted to the contrary, the operations can be performed in a different order than shown and can be combined and/or divided to form other operations than those specifically shown.

In particular, Figure 10 shows an arrangement involving UE 1010, gNB1 1020 (e.g., the UE's serving gNB), gNB2 1030 (e.g., a non-serving gNB), and LMF 1040. The reference numbers are omitted in the following description for clarity and conciseness.

In operation 1, gNB 1 and gNB2 can provide positioning-related configuration information to the LMF. The configuration can include capabilities related to both UL and DL signals used for positioning. DL signals used for positioning can include SSB, CSI-RS and/or DL-PRS. The SSB information can include detailed SSB configuration (e.g., periodicity, duration, positions in a burst, etc.). UL signals used for positioning can include UL-PRS.

In various embodiments, the configuration information provided by a gNB to the LMF can include information related to one or more of the following:
- a set of SSBs, where each SSB has an SSB index and is associated with a particular cell and/or gNB (e.g., a physical cell identity, PCID);
- a set of CSI-RS, where each CSI-RS is associated with a particular cell and/or gNB (e.g., PCID); and
- a set of DL-PRSs, where each DL-PRS is associated with a transmission reception point (TRP), a resource set ID, and a resource ID.
In other embodiments, beam-related information (e.g., association between cells and beams for the respective gNBs) can be pre-configured (e.g., via OAM).

In LTE for positioning methods such as OTDOA, a preparation step based on the enhanced cell ID (ECID) positioning method can be beneficial. For example, based upon the ECID results, the E-SMLC can prepare the necessary LPP Assistance Data (AD) for a specific UE for a subject positioning procedure based on the OTDOA method. Similarly, for NR positioning methods such as DL-TDOA, a preparation step based on the method NR-ECID can also be beneficial. Further, other NR positioning methods such as UL-TDOA or Multicell-RTT, which require UL SRS transmission from UE, can also benefit from preparation operations for determining spatial relations. This procedure can either be NR-ECID or a specific beam sweep results obtained from the UE, especially for FR2.

In some embodiments, for positioning measurements based on DL-PRS (e.g., for DL-only positioning), the preparation operation can an NR ECID procedure to obtain UE measurements. In other embodiments, for positioning measurements based on UL-SRS (e.g., for UL-only and multi-RTT positioning), the preparation operation can include a procedure for the configuration and reporting of UE DL-PRS measurements per beam/resource. In other embodiments, for positioning measurements based on UL-SRS (e.g., for UL-only and multi-RTT positioning), the preparation operation can include a procedure for the configuration and reporting of UE SSB or CSI-RS measurements per beam/resource. For example, this could be an NR ECID procedure.

In some embodiments, the LMF can request a gNB to configure a served UE to perform radio resource management (RRM) and/or beam sweep measurements for the purpose of determining spatial relations. In general, an LMF is only allowed to request and/or trigger positioning-related measurements by UE. However, such positioning-related measurements may not provide sufficient basis for determining the necessary spatial relations. Even so, the gNB can trigger RRM and/or beam sweep measurements by the UE, which may be more suitable for determining spatial relations. For example, the LMF can send a UE-specific NRPPa to a gNB, which may accept or reject the request or reject. If the gNB accepts, it configures the measurements via RRC signaling with the UE, receives the results via RRC signaling, and provides the results to the LMF in a responsive NRPPa message. Spatial relation which is UL and DL resource alignment in terms of direction can be considered as RRM related measurements which should be then delegated to gNB.

The optional preparation operations can provide UE measurement information that facilitates the positioning node to determine relevant DL beams/resources/indices for a UE, collectively referred to below as "beam" (singular) or "beams" (plural). For example, the UE measurements (e.g., received signal power) associated with the respective beams can indicate most favorable beams per beam set, per cell, per TRP, etc.

In some embodiments, during the preparation operations, the LMF may request UE capabilities regarding UL signals. The UE can provide the requested capability information, e.g., supported resource sets and resources, supported signal configurations, etc.

Operation 2 in Figure 10 correspond to the optional preparation operations discussed above. In operation 2a, the LMF prepares and provides a configuration to UE to perform various measurements. Although not shown, this can involve two messages: one from LMF to gNB (e.g., NRPPa), and a second from gNB to UE (e.g., RRC). Exemplary configured measurements can include RRM measurements, E-CID measurements, beam sweep measurements, etc. based on SSB, CSI-RS and/or DL-PRS. In operation 2b, the UE provides results for the configured measurements to the LMF (and optionally UE capabilities). Like operation 2a, operation 2b can involve two messages: one from UE to gNB (e.g., RRC), and a second from gNB to LMF (e.g., NRPPa).

In operation 3, based on the positioning configuration information received in operation 1, and optionally based on UE DL measurements and/or UL capabilities received in operation 2, the LMF can determine a set of spatial relations associated with the UE. For example, the LMF can determine a spatial relation between a DL signal or beam and an uplink signal such as UL-SRS. In operation 4, based on the information received in operation 1 (and optionally in operation 2) and the spatial relations determined in operation 3, the LMF can prepare a configuration of positioning signals (e.g., SRS) to be measured in association with a particular positioning method for estimating the UE's geographic location. In operation 5, the LMF sends the configuration, including the determined spatial relations, to the UE's serving gNB as part of an NRPPa request for the gNB to configure the UE for the positioning operation.

For example, in operation 5, the LMF can send a spatial relations list including three (3) spatial relationships to SSBs, with one SSB from serving cell 100 (provided by gNB1) and two from neighbor cell 101 (provided by gNB2). In this example, the spatial relations list can include the following three entries:
1. ID 1, reference signal SSB, Physical cell ID 100, SSB Index 1
2. ID 2, reference signal SSB, Physical cell ID 101, SSB Index 2
3. ID 3, reference signal SSB, Physical cell ID 101, SSB Index 3

In another example, the LMF can send a spatial relations list including three (3) spatial relationships to DL-PRS, with one DL-PRS from TRP1 and two from TRP2. TRPs 1 and 2 can be associated with either gNB 1 or gNB2. In this example, the spatial relations list can include the following three entries:
1. ID 1, reference signal DL-PRS, TRP ID 1, Resource set ID 1, resource ID 1
2. ID 2, reference signal DL-PRS, TRP ID 2, Resource set ID 1, resource ID 1
3. ID 3, reference signal DL-PRS, TRP ID 2, Resource set ID 1, resource ID 2

In another example, the LMF can send a spatial relations list including three (3) spatial relationships to a combination of DL-PRS and SSBs, e.g., one SSB from cell 100, and two DL-PRS transmitted by TRP2. In this example, the spatial relations list can include the following three entries:
1. ID 1, reference signal SSB, Physical cell ID 100, SSB Index 1
2. ID 2, reference signal DL-PRS, TRP ID 2, Resource set ID 1, resource ID 1
3. ID 3, reference signal DL-PRS, TRP ID 2, Resource set ID 1, resource ID 2
In some embodiments, the number of spatial relations in the list can be implicitly indicated by the length of the relevant beam list, limited to the number of UL signals that the UE supports.

In some embodiments, the LMF can provide an SSB configuration to serving gNB1 together with the spatial relation list. Optionally, the LMF will refrain from sending the SSB configuration to gNB1 if the SSB configuration has been sent earlier, and the SSB configuration is considered to be the same.

As discussed above, in operation 2b, the UE optionally provides capabilities related to UL signals. In such cases, the gNB may include in the configuration sent in operation 5 a selection of particular capabilities indicated by the UE in operation 2b.

In operation 6, gNB1 provides an UL signal (e.g., SRS) configuration to the UE via RRC signaling. The gNB can determine the number of UL signals to include in the configuration based on the spatial relations received in operation 5, the number of available uplink signal resources in the UE's serving cell, and (optionally) the UL signal capabilities received from the UE in operation 2b. The UL signal configuration provided to the UE in operation 6 also includes spatial relations for the configured UL signals.

In operation 7, based on the configuration received in operation 6, the UE determines an appropriate receive antenna configuration for a DL signal (e.g., CSI-RS, SSB, etc.) associated with each configured spatial relation. In addition, the UE determines a transmit antenna configuration for an UL signal associated with each configured spatial relation. For each spatial relation, the transmit antenna configuration should be the same as, or analogous to, the receive antenna configuration associated determined for the same spatial relation. For example, the transmit antenna configurations can be directionally aligned with the receive antenna configurations.

In operation 8, the UE sends a response message (e.g., via RRC signaling) to gNB1 indicating that the configuration is complete. This can be done, e.g., after the UE has finished the determinations in operation 7.

In some embodiments, the UE may determine that the spatial relations of two different UL signal configurations are associated with the same transmit antenna configuration. In such case, the UE can indicate in the response message that these two UL signal configurations will be transmitted with the same transmit antenna configuration, or the UE can indicate in the response message the one of the two configurations is rejected.

In operation 9, gNB1 can inform the LMF about the UL signal configurations that were provided to and accepted by the UE. In some embodiments, the gNB can also indicate any instances of multiple UL signal configurations that will be transmitted by the UE with a single transmit antenna configuration. In some embodiments, gNB1 can also indicate the spatial relation(s) per UL signal configuration. In case two spatial relations have been mapped to the same uplink transmit antenna configuration, then all these can be indicated as spatially related to the same uplink signal configuration in the response message.

In operation 10, the LMF can forward the UL signal configurations to be used by the UE to one or more gNBs (e.g., gNB2) serving neighbor cells to the UE's serving cell. This information can be provided, e.g., via an NRPPa message. In some embodiments, the LMF only selects gNBs associated with DL signals having spatial relations in the spatial relations list provided in operation 5.

After receiving such information, all concerned gNBs (e.g., gNB1 and gNB2) can measure the UL signals transmitted by the UE according to the UL signal configurations provided by the LMF. In some embodiments, if two or more UL signal configurations are indicated (e.g., by the UE in operation 8) to be associated with the same UE transmit antenna configuration, the gNB combines measurements from these UL signal configurations into a single measurement value.

In operation 11, all concerned gNBs (e.g., gNB1 and gNB2) can report measurement results for the UL signals transmitted by the UE to the LMF. The LMF can estimate the UE's geographic location based on the received measurements.

In some embodiments, the LMF can prepare a configuration in operation 4 for a positioning method that involves measurements of both UL signals (e.g., by gNBs) and DL signals (e.g., by the UE). In such embodiments, the UE can also provide measurement results for the DL signals in operation 11. If needed, the LMF can configure the gNBs in operations 5 and/or 10 to transmit the DL signals to be measured by the UE in support of the positioning method.

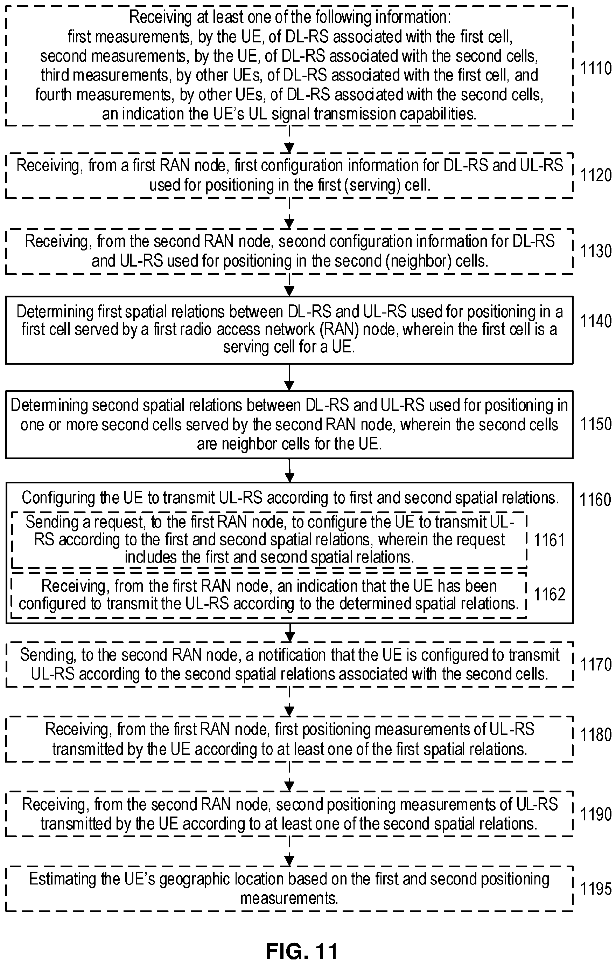

The embodiments described above can be further illustrated with reference to Figures 11-13, which depict exemplary methods (e.g., procedures) for a positioning node, a first RAN node, and a UE, respectively. In other words, various features of the operations described below in relation to Figures 11-13 correspond to various embodiments described above, e.g., with respect to Figure 10. The exemplary methods shown in Figures 11-13 can be used cooperatively (i.e., with each other and/or with the procedure shown in Figure 10) to provide various exemplary advantage, benefits, and/or solutions to problems described herein. Although Figures 11-13 show specific blocks in particular orders, the operations of the blocks can be performed in different orders than shown and can be combined and/or divided into blocks having different functionality than shown. Optional blocks or operations are indicated by dashed lines.

In particular, Figure 11 is a flow diagram of an exemplary method (e.g., procedure) for a positioning node coupled to a radio access network (RAN), according to various exemplary embodiments of the present disclosure. The exemplary method can be performed by a positioning node (e.g., E-SMLC, LMF, etc.), such as those described herein with reference to other figures.

The exemplary method can include the operations of block 1140, where the positioning node can determine first spatial relations between downlink reference signals (DL-RS) and uplink reference signals (UL-RS) used for positioning in a first cell served by a first RAN node, wherein the first cell is a serving cell for a user equipment (UE). The exemplary method can also include the operations of block 1150, where the positioning node can determine second spatial relations between DL-RS and UL-RS used for positioning in one or more second cells served by the second RAN node, wherein the second cells are neighbor cells to the first cell. Figure 10 operation 3 is an example of the operations of blocks 1140-1150.

The exemplary method can also include the operations of block 1160, where the positioning node can configure the UE to transmit UL-RS according to the first and second spatial relations. In some embodiments, the configuring operations of block 1160 can include the operations of sub-block 1161, where the positioning node can send a request, to the first RAN node, to configure the UE to transmit UL-RS according to the first and second spatial relations. The request includes the first and second spatial relations. An exemplary request is Figure 10 operation 5. In some of these embodiments, the configuring operations of block 1160 can also include the operations of sub-block 1162, where the positioning node can receive, from the first RAN node, a response including an indication that the UE has been configured to transmit the UL-RS according to the determined spatial relations. An exemplary response is Figure 10 operation 9. In some variants, the response can also include one or more of the following:
- identification of UL-RS configurations that were accepted by the UE;
- the first or second spatial relation that corresponds to each UL-RS configuration that was accepted by the UE;
- an indication that the UE will transmit UL-RS according to at least two UL-RS configurations using substantially the same transmit antenna configuration; and
- an indication that the UE has rejected an UL-RS configurations because it would require using substantially the same transmit antenna configuration as another UL-RS configuration.

In some of these embodiments, the exemplary method can also include the operations of block 1170, where the positioning node can send, to the second RAN node, a notification that the UE is configured to transmit UL-RS according to the second spatial relations associated with the second cells. An exemplary notification is Figure 10 operation 10.

In some embodiments, the first spatial relations and the second spatial relations are associated with respective DL-RS. For each DL-RS that is a synchronization signal/PBCH block (SSB), the associated first or second spatial relation includes a cell identifier and an SSB index. For each DL-RS that is a positioning reference signal (PRS), the associated first or second spatial relation includes a transmission reception point (TRP) identifier and a PRS resource set identifier.

In some embodiments, the exemplary method can also include the operations of blocks 1120-1130. In block 1120, the positioning node can receive, from the first RAN node, first configuration information for DL-RS and UL-RS used for positioning in the first cell. In block 1130, the positioning node can receive, from the second RAN node, second configuration information for DL-RS and UL-RS used for positioning in the one or more second cells. Figure 10 operation 1 is an example of receiving such configuration information. In such embodiments, determining the first spatial relations (e.g., in block 1140) can be based on the first configuration information, and determining the second spatial relations (e.g., in block 1150) can be based on the second configuration information.

In some embodiments, the exemplary method can also include the operations of block 1110, where the positioning node can receive at least one of the following information:
- first measurements, by the UE, of DL-RS associated with the first cell,
- second measurements, by the UE, of DL-RS associated with the second cells,
- third measurements, by one or more other UEs, of DL-RS associated with the first cell,
- fourth measurements, by one or more other UEs, of DL-RS associated with the second cells, and
- an indication the UE's UL signal transmission capabilities.

Figure 10 operation 2b is an example of receiving such measurement information. In such embodiments, determining at least one of the first and second spatial relations (e.g., in blocks 1140 and/or 1150) can be based on the received information (e.g., in block 1110). For example, the first measurements can be used for determining the first spatial relations and the second measurements can be used for determining the second spatial relations. In some variants, the first and second measurements can be positioning measurements, received from the UE. In other variants, the first and second measurements can be received from the first RAN node and can include at least one of the following: radio resource management (RRM) measurements and beam sweep measurements.

In some embodiments, the exemplary method can also include the operations of blocks 1180-1190. In block 1180, the positioning node can receive, from the first RAN node, first positioning measurements of UL-RS transmitted by the UE according to at least one of the first spatial relations. In block 1190, the positioning node can receive, from the second RAN node, second positioning measurements of UL-RS transmitted by the UE according to at least one of the second spatial relations. Figure 10 operation 11 is an example of receiving such positioning measurements. In some of these embodiments, the exemplary method can also include the operations of block 1195, where the positioning node can estimate the UE's geographic location based on the first and second positioning measurements.

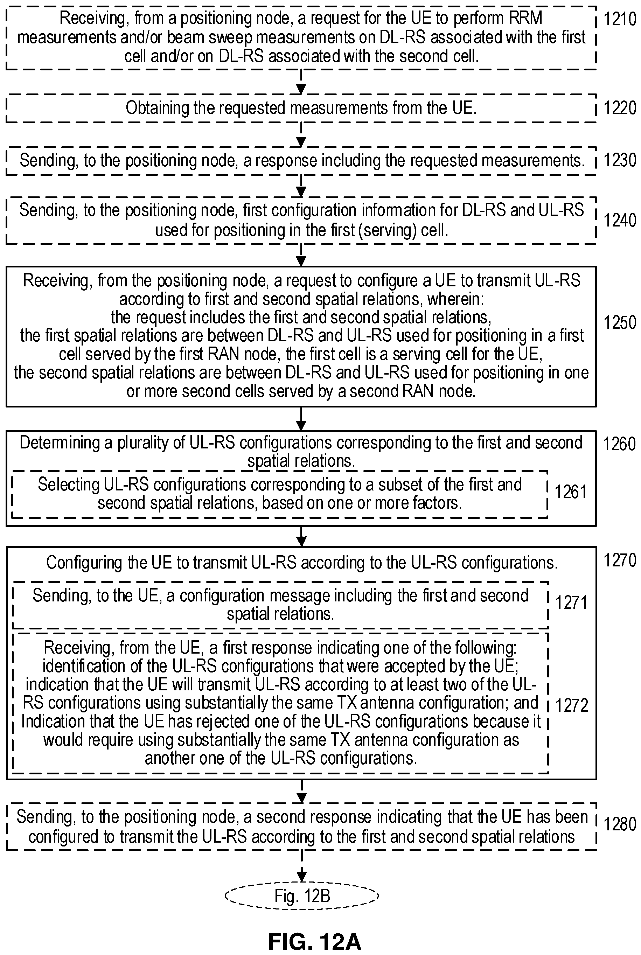

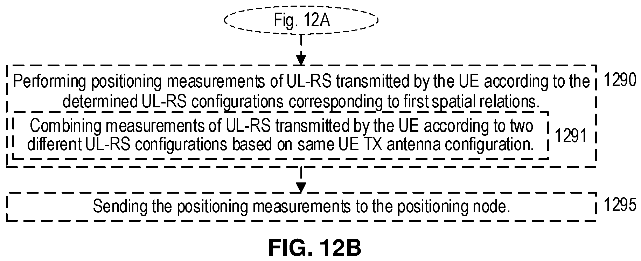

In addition, Figure 12 (which includes Figures 12A-B) is a flow diagram of an exemplary method (e.g., procedure) for a first radio access network (RAN) node configured to support positioning in the RAN, according to various exemplary embodiments of the present disclosure. The exemplary method can be performed by a RAN node (e.g., base station, eNB, gNB, etc. or component thereof such as a CU or DU), such as described herein with reference to other figures.

The exemplary method can include the operations of block 1250, where the first RAN node can receive, from a positioning node, a request to configure a user equipment (UE) to transmit uplink reference signals (UL-RS) for positioning according to first and second spatial relations. The request can include the first and second spatial relations. The first spatial relations are between downlink reference signals (DL-RS) and UL-RS used for positioning in a first cell served by the first RAN node, where the first cell is a serving cell for the UE. The second spatial relations are between DL-RS and UL-RS used for positioning in one or more second cells served by a second RAN node, where the second cells are neighbor cells to the first cell. Figure 10 operation 5 is an example of the operations of block 1250.

The exemplary method can also include the operations of block 1260, where the first RAN node can determine a plurality of UL-RS configurations corresponding to the first and second spatial relations. The exemplary method can also include the operations of block 1270, where the first RAN node can configure the UE to transmit UL-RS according to determined UL-RS configurations.

In some embodiments, the exemplary method can also include the operations of block 1240, where the first RAN node can send, to the positioning node, first configuration information for DL-RS and UL-RS used for positioning in the first cell. Such information can be used by the positioning node, for example, to determine the spatial relations received in block 1250. Figure 10 operation 9 is an example of sending such configuration information.

In some embodiments, the determining operations of block 1260 can include the operations of sub-block 1261, where the first RAN node can select UL-RS configurations corresponding to a subset of the first and second spatial relations. In such embodiments, the selected subset can be based on various factors including available UL signal resources in the first cell and/or the one or more second cells, UL configuration capabilities of the UE, etc.

In some embodiments, the determined UL-RS configurations (e.g., in block 1260) can include the first and second spatial relations. In such embodiments, the configuring operations of block 1270 can include the operations of sub-block 1271, where the first RAN node can send, to the UE, a configuration message including the first and second spatial relations. Figure 10 operation 6 is an example of the operations of block 1271. In some embodiments, the configuring operations of block 1270 can include the operations of sub-block 1272, where the first RAN node can receive, from the UE, a first response including one or more of the following:
- identification of the determined UL-RS configurations that were accepted by the UE;
- an indication that the UE will transmit UL-RS according to at least two of the determined UL-RS configurations using substantially the same transmit antenna configuration; and
- an indication that the UE has rejected one of the determined UL-RS configurations because it would require using substantially the same transmit antenna configuration as another one of the determined UL-RS configurations.
Figure 10 operation 8 is an example of the operations of sub-block 1272.

In some embodiments, the exemplary method can also include the operations of block 1280, where the first RAN node can send, to the positioning node, a second response indicating that the UE has been configured to transmit the UL-RS according to the first and second spatial relations. Figure 10 operation 9 is an exemplary second response. This second response can be responsive to the operations of block 1270 including any optional sub-blocks (e.g., first response). In some embodiments, the second response can also include one or more of the following:
- identification of the determined UL-RS configurations that were accepted by the UE;
- the first or second spatial relation that corresponds to each determined UL-RS configuration that was accepted by the UE;
- an indication that the UE will transmit UL-RS according to at least two of the determined UL-RS configurations using substantially the same transmit antenna configuration; and
- an indication that the UE has rejected one of the determined UL-RS configurations because it would require using substantially the same transmit antenna configuration as another one of the determined UL-RS configurations.

In some embodiments, the first spatial relations and the second spatial relations are associated with respective DL-RS. For each DL-RS that is a synchronization signal/PBCH block (SSB), the associated first or second spatial relation includes a cell identifier and an SSB index. For each DL-RS that is a positioning reference signal (PRS), the associated first or second spatial relation includes a transmission reception point (TRP) identifier and a PRS resource set identifier.

In some embodiments, the exemplary method can also include the operations of blocks 1290-1295. In block 1290, the first RAN node can perform positioning measurements of UL-RS transmitted by the UE according to the determined UL-RS configurations corresponding to first spatial relations. In block 1295, the first RAN node can send the positioning measurements to the positioning node. Figure 10 operation 11 is an example of the operations of block 1295. In some embodiments, performing the measurements (e.g., in block 1290) can include the operations of sub-block 1291, where the first RAN node can combine measurements of UL-RS transmitted by the UE according to two different UL-RS configurations based on the same UE transmit antenna configuration.

In some embodiments, the exemplary method can also include the operations of blocks 1210-1230. In block 1210, the first RAN node can receive, from the positioning node, a request for the UE to perform at least one of the following measurements:
- radio resource management (RRM) measurements on DL-RS associated with the first cell;
- beam sweep measurements on DL-RS associated with the first cell;
- RRM measurements on DL-RS associated with the second cells; and
- beam sweep measurements on DL-RS associated with the second cells.
In block 1220, the first RAN node can obtain the requested measurements from the UE. In block 1230, the first RAN node can send, to the positioning node, a response including the requested measurements. Figure 10 operations 2a-2b are examples of the operations of blocks 1210-1230.

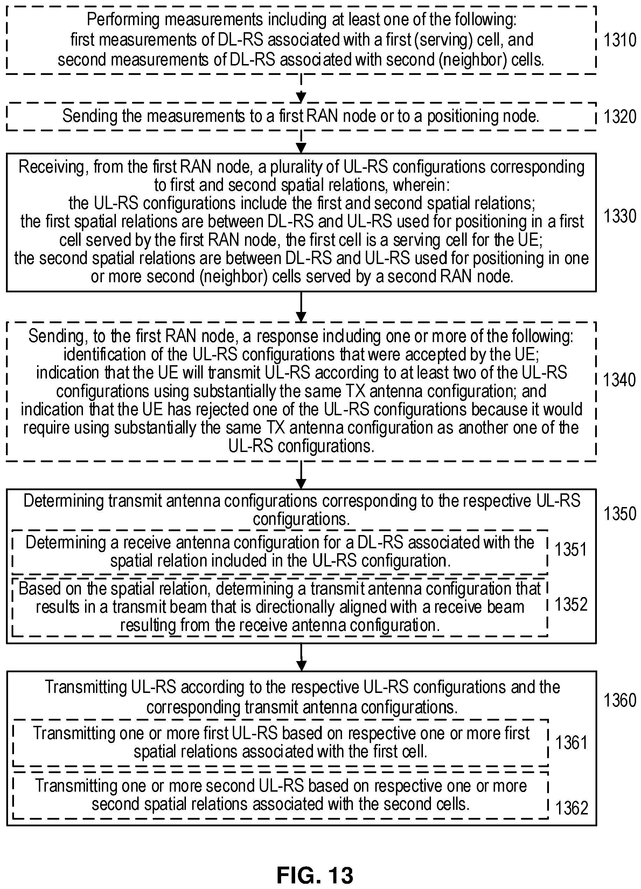

In addition, Figure 13 is a flow diagram of an exemplary method (e.g., procedure) for a user equipment (UE) configured to support positioning in a radio access network (RAN), according to various exemplary embodiments of the present disclosure. The exemplary method can be performed by a user equipment (UE, e.g., wireless device, IoT device, etc. or components thereof), such as described herein with reference to other figures.

The exemplary method can include the operations of block 1330, where the UE can receive, from a first RAN node, a plurality of UL-RS configurations corresponding to first and second spatial relations. The UL-RS configurations can include the first and second spatial relations. The first spatial relations are between DL-RS and UL-RS used for positioning in a first cell served by the first RAN node, where the first cell is a serving cell for the UE. The second spatial relations are between DL-RS and UL-RS used for positioning in one or more second cells served by a second RAN node, where the second cells are neighbor cells to the first cell. Figure 10 operation 6 is an example of the operations of block 1330.

The exemplary method can also include the operations of block 1350, where the UE can determine transmit antenna configurations corresponding to the respective UL-RS configurations. Figure 10 operation 7 is an example of the operations of block 1350. The exemplary method can also include the operations of block 1360, where the UE can transmit UL-RS according to the respective UL-RS configurations and the corresponding transmit antenna configurations.

In some embodiments, the exemplary method can also include the operations of blocks 1310-1320. In block 1310, the UE can perform measurements that include first measurements of DL-RS associated with the first cell and/or second measurements of DL-RS associated with the second cells. In block 1320, the UE can send the measurements to the first RAN node or to a positioning node. Figure 10 operations 2a-2b are examples of the operations of blocks 1310-1320. Such information can be used by the positioning node, for example, to determine the spatial relations received in block 1330.

In some of these embodiments, the first and/or second measurements (e.g., performed in block 1310) are positioning measurements and are sent to the positioning node. In other embodiments, the first and/or second measurements are sent to the first RAN node and are radio resource management (RRM) measurements and/or beam sweep measurements.

In some embodiments, the first spatial relations and the second spatial relations are associated with respective DL-RS. For each DL-RS that is a synchronization signal/PBCH block (SSB), the associated first or second spatial relation includes a cell identifier and an SSB index. For each DL-RS that is a positioning reference signal (PRS), the associated first or second spatial relation includes a transmission reception point (TRP) identifier and a PRS resource set identifier.

In some embodiments, the determining operations of block 1350 can include the operations of sub-blocks 1351-1352, applied to each UL-RS configuration (e.g., received in block 1330). In sub-block 1351, the UE can determine a receive antenna configuration for a DL-RS associated with the spatial relation included in the UL-RS configuration. In sub-block 1352, the UE can, based on the spatial relation, determine a transmit antenna configuration that results in a transmit beam that is directionally aligned with a receive beam resulting from the receive antenna configuration.

In some of these embodiments, at least two of the transmit antenna configurations can be substantially the same. In such embodiments, the exemplary method can also include the operations of block 1340, where the UE can send, to the first RAN node, a response including one or more of the following:
- identification of the UL-RS configurations that were accepted by the UE;
- an indication that the UE will transmit UL-RS according to at least two of the UL-RS configurations using substantially the same transmit antenna configuration; and
- an indication that the UE has rejected one of the UL-RS configurations because it would require using substantially the same transmit antenna configuration as another one of the UL-RS configurations.

In some embodiments, the transmitting operations in block 1360 can include the operations of sub-blocks 1361-1362. In sub-block 1361, the UE can transmit one or more first UL-RS based on respective one or more first spatial relations associated with the first cell served by the first RAN node. In sub-block 1362, the UE can transmit one or more second UL-RS based on respective one or more second spatial relations associated with the second cells served by the second RAN node.

Although various embodiments are described above in terms of methods, techniques, and/or procedures, the person of ordinary skill will readily comprehend that such methods, techniques, and/or procedures can be embodied by various combinations of hardware and software in various systems, communication devices, computing devices, control devices, apparatuses, non-transitory computer-readable media, computer program products, *etc.*

Figure 14 shows a block diagram of an exemplary wireless device or user equipment (UE) 1400 (referred to hereinafter as "UE 1400") according to various embodiments of the present disclosure, including those described above with reference to other figures. For example, UE 1400 can be configured by execution of instructions, stored on a computer-readable medium, to perform operations corresponding to one or more of the exemplary methods described herein.

UE 1400 can include a processor 1410 (also referred to as "processing circuitry") that can be operably connected to a program memory 1420 and/or a data memory 1430 via a bus 1470 that can comprise parallel address and data buses, serial ports, or other methods and/or structures known to those of ordinary skill in the art. Program memory 1420 can store software code, programs, and/or instructions (collectively shown as computer program product 1421 in Figure 14) that, when executed by processor 1410, can configure and/or facilitate UE 1400 to perform various operations, including operations corresponding to various exemplary methods described herein. As part of or in addition to such operations, execution of such instructions can configure and/or facilitate UE 1400 to communicate using one or more wired or wireless communication protocols, including one or more wireless communication protocols standardized by 3GPP, 3GPP2, or IEEE, such as those commonly known as 5G/NR, LTE, LTE-A, UMTS, HSPA, GSM, GPRS, EDGE, 1xRTT, CDMA2000, 802.11 WiFi, HDMI, USB, Firewire, *etc.,* or any other current or future protocols that can be utilized in conjunction with radio transceiver 1440, user interface 1450, and/or control interface 1460.

As another example, processor 1410 can execute program code stored in program memory 1420 that corresponds to MAC, RLC, PDCP, and RRC layer protocols standardized by 3GPP (*e.g.,* for NR and/or LTE). As a further example, processor 1410 can execute program code stored in program memory 1420 that, together with radio transceiver 1440, implements corresponding PHY layer protocols, such as Orthogonal Frequency Division Multiplexing (OFDM), Orthogonal Frequency Division Multiple Access (OFDMA), and Single-Carrier Frequency Division Multiple Access (SC-FDMA). As another example, processor 1410 can execute program code stored in program memory 1420 that, together with radio transceiver 1440, implements device-to-device (D2D) communications with other compatible devices and/or UEs.

Program memory 1420 can also include software code executed by processor 1410 to control the functions of UE 1400, including configuring and controlling various components such as radio transceiver 1440, user interface 1450, and/or control interface 1460. Program memory 1420 can also comprise one or more application programs and/or modules comprising computer-executable instructions embodying any of the exemplary methods described herein. Such software code can be specified or written using any known or future developed programming language, such as *e.g.,* Java, C++, C, Objective C, HTML, XHTML, machine code, and Assembler, as long as the desired functionality, e.g., as defined by the implemented method steps, is preserved. In addition, or as an alternative, program memory 1420 can comprise an external storage arrangement (not shown) remote from UE 1400, from which the instructions can be downloaded into program memory 1420 located within or removably coupled to UE 1400, so as to enable execution of such instructions.

Data memory 1430 can include memory area for processor 1410 to store variables used in protocols, configuration, control, and other functions of UE 1400, including operations corresponding to, or comprising, any of the exemplary methods described herein. Moreover, program memory 1420 and/or data memory 1430 can include non-volatile memory (e.g., flash memory), volatile memory (e.g., static or dynamic RAM), or a combination thereof. Furthermore, data memory 1430 can comprise a memory slot by which removable memory cards in one or more formats *(e.g.,* SD Card, Memory Stick, Compact Flash, *etc.)* can be inserted and removed.

Persons of ordinary skill will recognize that processor 1410 can include multiple individual processors (including, e.g., multi-core processors), each of which implements a portion of the functionality described above. In such cases, multiple individual processors can be commonly connected to program memory 1420 and data memory 1430 or individually connected to multiple individual program memories and or data memories. More generally, persons of ordinary skill in the art will recognize that various protocols and other functions of UE 1400 can be implemented in many different computer arrangements comprising different combinations of hardware and software including, but not limited to, application processors, signal processors, general-purpose processors, multi-core processors, ASICs, fixed and/or programmable digital circuitry, analog baseband circuitry, radio-frequency circuitry, software, firmware, and middleware.

Radio transceiver 1440 can include radio-frequency transmitter and/or receiver functionality that facilitates the UE 1400 to communicate with other equipment supporting like wireless communication standards and/or protocols. In some exemplary embodiments, the radio transceiver 1440 includes one or more transmitters and one or more receivers that enable UE 1400 to communicate according to various protocols and/or methods proposed for standardization by 3GPP and/or other standards-setting organizations (SSOs). For example, such functionality can operate cooperatively with processor 1410 to implement a PHY layer based on OFDM, OFDMA, and/or SC-FDMA technologies, such as described herein with respect to other figures.

In some exemplary embodiments, radio transceiver 1440 includes one or more transmitters and one or more receivers that can facilitate the UE 1400 to communicate with various LTE, LTE-Advanced (LTE-A), and/or NR networks according to standards promulgated by 3GPP. In some exemplary embodiments of the present disclosure, the radio transceiver 1440 includes circuitry, firmware, *etc.* necessary for the UE 1400 to communicate with various NR, NR-U, LTE, LTE-A, LTE-LAA, UMTS, and/or GSM/EDGE networks, also according to 3GPP standards. In some embodiments, radio transceiver 1440 can include circuitry supporting D2D communications between UE 1400 and other compatible devices.

In some embodiments, radio transceiver 1440 includes circuitry, firmware, *etc.* necessary for the UE 1400 to communicate with various CDMA2000 networks, according to 3GPP2 standards. In some embodiments, the radio transceiver 1440 can be capable of communicating using radio technologies that operate in unlicensed frequency bands, such as IEEE 802.11 WiFi that operates using frequencies in the regions of 2.4, 5.6, and/or 60 GHz. In some embodiments, radio transceiver 1440 can include a transceiver that is capable of wired communication, such as by using IEEE 802.3 Ethernet technology. The functionality particular to each of these embodiments can be coupled with and/or controlled by other circuitry in the UE 1400, such as the processor 1410 executing program code stored in program memory 1420 in conjunction with, and/or supported by, data memory 1430.

User interface 1450 can take various forms depending on the particular embodiment of UE 1400, or can be absent from UE 1400 entirely. In some embodiments, user interface 1450 can comprise a microphone, a loudspeaker, slidable buttons, depressible buttons, a display, a touchscreen display, a mechanical or virtual keypad, a mechanical or virtual keyboard, and/or any other user-interface features commonly found on mobile phones. In other embodiments, the UE 1400 can comprise a tablet computing device including a larger touchscreen display. In such embodiments, one or more of the mechanical features of the user interface 1450 can be replaced by comparable or functionally equivalent virtual user interface features (*e*.*g*., virtual keypad, virtual buttons, *etc.*) implemented using the touchscreen display, as familiar to persons of ordinary skill in the art. In other embodiments, the UE 1400 can be a digital computing device, such as a laptop computer, desktop computer, workstation, *etc.* that comprises a mechanical keyboard that can be integrated, detached, or detachable depending on the particular embodiment. Such a digital computing device can also comprise a touch screen display. Many exemplary embodiments of the UE 1400 having a touch screen display are capable of receiving user inputs, such as inputs related to exemplary methods described herein or otherwise known to persons of ordinary skill.

In some embodiments, UE 1400 can include an orientation sensor, which can be used in various ways by features and functions of UE 1400. For example, the UE 1400 can use outputs of the orientation sensor to determine when a user has changed the physical orientation of the UE 1400's touch screen display. An indication signal from the orientation sensor can be available to any application program executing on the UE 1400, such that an application program can change the orientation of a screen display (*e*.*g*., from portrait to landscape) automatically when the indication signal indicates an approximate 90-degree change in physical orientation of the device. In this exemplary manner, the application program can maintain the screen display in a manner that is readable by the user, regardless of the physical orientation of the device. In addition, the output of the orientation sensor can be used in conjunction with various exemplary embodiments of the present disclosure.

A control interface 1460 of the UE 1400 can take various forms depending on the particular exemplary embodiment of UE 1400 and of the particular interface requirements of other devices that the UE 1400 is intended to communicate with and/or control. For example, the control interface 1460 can comprise an RS-232 interface, a USB interface, an HDMI interface, a Bluetooth interface, an IEEE ("Firewire") interface, an I²C interface, a PCMCIA interface, or the like. In some exemplary embodiments of the present disclosure, control interface 1460 can comprise an IEEE 802.3 Ethernet interface such as described above. In some exemplary embodiments of the present disclosure, the control interface 1460 can comprise analog interface circuitry including, for example, one or more digital-to-analog converters (DACs) and/or analog-to-digital converters (ADCs).

Persons of ordinary skill in the art can recognize the above list of features, interfaces, and radio-frequency communication standards is merely exemplary, and not limiting to the scope of the present disclosure. In other words, the UE 1400 can comprise more functionality than is shown in Figure 14 including, for example, a video and/or still-image camera, microphone, media player and/or recorder, *etc.* Moreover, radio transceiver 1440 can include circuitry necessary to communicate using additional radio-frequency communication standards including Bluetooth, GPS, and/or others. Moreover, the processor 1410 can execute software code stored in the program memory 1420 to control such additional functionality. For example, directional velocity and/or position estimates output from a GPS receiver can be available to any application program executing on the UE 1400, including any program code corresponding to and/or embodying any exemplary embodiments (*e*.*g*., of methods) described herein.

Figure 15 shows a block diagram of an exemplary network node 1500 according to various embodiments of the present disclosure, including those described above with reference to other figures. For example, exemplary network node 1500 can be configured by execution of instructions, stored on a computer-readable medium, to perform operations corresponding to one or more of the exemplary methods described herein. In some exemplary embodiments, network node 1500 can comprise a base station, eNB, gNB, or one or more components thereof. For example, network node 1500 can be configured as a central unit (CU) and one or more distributed units (DUs) according to NR gNB architectures specified by 3GPP. More generally, the functionally of network node 1500 can be distributed across various physical devices and/or functional units, modules, *etc.*

Network node 1500 can include processor 1510 (also referred to as "processing circuitry") that is operably connected to program memory 1520 and data memory 1530 via bus 1570, which can include parallel address and data buses, serial ports, or other methods and/or structures known to those of ordinary skill in the art.

Program memory 1520 can store software code, programs, and/or instructions (collectively shown as computer program product 1521 in Figure 15) that, when executed by processor 1510, can configure and/or facilitate network node 1500 to perform various operations, including operations corresponding to various exemplary methods described herein. As part of and/or in addition to such operations, program memory 1520 can also include software code executed by processor 1510 that can configure and/or facilitate network node 1500 to communicate with one or more other UEs or network nodes using other protocols or protocol layers, such as one or more of the PHY, MAC, RLC, PDCP, and RRC layer protocols standardized by 3GPP for LTE, LTE-A, and/or NR, or any other higher-layer (e.g., NAS) protocols utilized in conjunction with radio network interface 1540 and/or core network interface 1550. By way of example, core network interface 1550 can comprise the S1 or NG interface and radio network interface 1540 can comprise the Uu interface, as standardized by 3GPP. Program memory 1520 can also comprise software code executed by processor 1510 to control the functions of network node 1500, including configuring and controlling various components such as radio network interface 1540 and core network interface 1550.

Data memory 1530 can comprise memory area for processor 1510 to store variables used in protocols, configuration, control, and other functions of network node 1500. As such, program memory 1520 and data memory 1530 can comprise non-volatile memory (*e*.*g*., flash memory, hard disk, *etc.*)*,* volatile memory (*e.g.,* static or dynamic RAM), network-based (*e.g.,* "cloud") storage, or a combination thereof. Persons of ordinary skill in the art will recognize that processor 1510 can include multiple individual processors (not shown), each of which implements a portion of the functionality described above. In such case, multiple individual processors may be commonly connected to program memory 1520 and data memory 1530 or individually connected to multiple individual program memories and/or data memories. More generally, persons of ordinary skill will recognize that various protocols and other functions of network node 1500 may be implemented in many different combinations of hardware and software including, but not limited to, application processors, signal processors, general-purpose processors, multi-core processors, ASICs, fixed digital circuitry, programmable digital circuitry, analog baseband circuitry, radio-frequency circuitry, software, firmware, and middleware.

Radio network interface 1540 can comprise transmitters, receivers, signal processors, ASICs, antennas, beamforming units, and other circuitry that enables network node 1500 to communicate with other equipment such as, in some embodiments, a plurality of compatible user equipment (UE). In some embodiments, interface 1540 can also enable network node 1500 to communicate with compatible satellites of a satellite communication network. In some exemplary embodiments, radio network interface 1540 can comprise various protocols or protocol layers, such as the PHY, MAC, RLC, PDCP, and/or RRC layer protocols standardized by 3GPP for LTE, LTE-A, LTE-LAA, NR, NR-U, *etc.*; improvements thereto such as described herein above; or any other higher-layer protocols utilized in conjunction with radio network interface 1540. According to further exemplary embodiments of the present disclosure, the radio network interface 1540 can comprise a PHY layer based on OFDM, OFDMA, and/or SC-FDMA technologies. In some embodiments, the functionality of such a PHY layer can be provided cooperatively by radio network interface 1540 and processor 1510 (including program code in memory 1520).

Core network interface 1550 can comprise transmitters, receivers, and other circuitry that enables network node 1500 to communicate with other equipment in a core network such as, in some embodiments, circuit-switched (CS) and/or packet-switched Core (PS) networks. In some embodiments, core network interface 1550 can comprise the S1 interface standardized by 3GPP. In some embodiments, core network interface 1550 can comprise the NG interface standardized by 3GPP. In some exemplary embodiments, core network interface 1550 can comprise one or more interfaces to one or more AMFs, SMFs, SGWs, MMEs, SGSNs, GGSNs, and other physical devices that comprise functionality found in GERAN, UTRAN, EPC, 5GC, and CDMA2000 core networks that are known to persons of ordinary skill in the art. In some embodiments, these one or more interfaces may be multiplexed together on a single physical interface. In some embodiments, lower layers of core network interface 1550 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art.

In some embodiments, network node 1500 can include hardware and/or software that configures and/or facilitates network node 1500 to communicate with other network nodes in a RAN (also referred to as a "wireless network"), such as with other eNBs, gNBs, ng-eNBs, en-gNBs, IAB nodes, etc. Such hardware and/or software can be part of radio network interface 1540 and/or core network interface 1550, or it can be a separate functional unit (not shown). For example, such hardware and/or software can configure and/or facilitate network node 1500 to communicate with other RAN nodes via the X2 or Xn interfaces, as standardized by 3GPP.

OA&M interface 1560 can comprise transmitters, receivers, and other circuitry that enables network node 1500 to communicate with external networks, computers, databases, and the like for purposes of operations, administration, and maintenance of network node 1500 or other network equipment operably connected thereto. Lower layers of OA&M interface 1560 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art. Moreover, in some embodiments, one or more of radio network interface 1540, core network interface 1550, and OA&M interface 1560 may be multiplexed together on a single physical interface, such as the examples listed above.

Figure 16 is a block diagram of an exemplary communication network configured to provide over-the-top (OTT) data services between a host computer and a user equipment (UE), according to various exemplary embodiments of the present disclosure. UE 1610 can communicate with radio access network (RAN, also referred to as "wireless network") 1630 over radio interface 1620, which can be based on protocols described above including, *e*.*g*., LTE, LTE-A, and 5G/NR. For example, UE 1610 can be configured and/or arranged as shown in other figures discussed above.

RAN 1630 can include one or more terrestrial network nodes (*e*.*g*., base stations, eNBs, gNBs, controllers, *etc.*) operable in licensed spectrum bands, as well one or more network nodes operable in unlicensed spectrum (using, *e*.*g*., LAA or NR-U technology), such as a 2.4-GHz band and/or a 5-GHz band. In such cases, the network nodes comprising RAN 1630 can cooperatively operate using licensed and unlicensed spectrum. In some embodiments, RAN 1630 can include, or be capable of communication with, one or more satellites comprising a satellite access network.

RAN 1630 can further communicate with core network 1640 according to various protocols and interfaces described above. For example, one or more apparatus (*e*.*g*., base stations, eNBs, gNBs, *etc.*) comprising RAN 1630 can communicate to core network 1640 via core network interface 1650 described above. In some exemplary embodiments, RAN 1630 and core network 1640 can be configured and/or arranged as shown in other figures discussed above. For example, eNBs comprising an E-UTRAN 1630 can communicate with an EPC core network 1640 via an S1 interface. As another example, gNBs and ng-eNBs comprising an NG-RAN 1630 can communicate with a 5GC core network 1630 via an NG interface.

Core network 1640 can further communicate with an external packet data network, illustrated in Figure 16 as Internet 1650, according to various protocols and interfaces known to persons of ordinary skill in the art. Many other devices and/or networks can also connect to and communicate via Internet 1650, such as exemplary host computer 1660. In some exemplary embodiments, host computer 1660 can communicate with UE 1610 using Internet 1650, core network 1640, and RAN 1630 as intermediaries. Host computer 1660 can be a server (*e*.*g*., an application server) under ownership and/or control of a service provider. Host computer 1660 can be operated by the OTT service provider or by another entity on the service provider's behalf.

For example, host computer 1660 can provide an over-the-top (OTT) packet data service to UE 1610 using facilities of core network 1640 and RAN 1630, which can be unaware of the routing of an outgoing/incoming communication to/from host computer 1660. Similarly, host computer 1660 can be unaware of routing of a transmission from the host computer to the UE, *e*.*g*., the routing of the transmission through RAN 1630. Various OTT services can be provided using the exemplary configuration shown in Figure 16 including, *e*.*g*., streaming (unidirectional) audio and/or video from host computer to UE, interactive (bidirectional) audio and/or video between host computer and UE, interactive messaging or social communication, interactive virtual or augmented reality, *etc.*

The exemplary network shown in Figure 16 can also include measurement procedures and/or sensors that monitor network performance metrics including data rate, latency and other factors that are improved by exemplary embodiments disclosed herein. The exemplary network can also include functionality for reconfiguring the link between the endpoints (*e*.*g*., host computer and UE) in response to variations in the measurement results. Such procedures and functionalities are known and practiced; if the network hides or abstracts the radio interface from the OTT service provider, measurements can be facilitated by proprietary signaling between the UE and the host computer.

The embodiments described herein provide novel techniques for configuring and utilizing spatial relations of reference signals that facilitate positioning of UEs based on measurements of these signals. Such techniques can facilitate more accurate and/or more timely UE location estimates by a positioning node (e.g., LMF), as well as reduced network signaling complexity. Such advantages can be very important in certain applications, such as high-precision/high-accuracy positioning and/or low-complexity positioning. When used in NR UEs (*e*.*g*., UE 1610) and gNBs (*e*.*g*., gNBs comprising RAN 1630), embodiments described herein can provide various improvements, benefits, and/or advantages that facilitate the use of location-based OTT services. As a consequence, this improves the performance of these services as experienced by OTT service providers and end-users, including more precise delivery of services with lower latency without excessive UE energy consumption or other reductions in user experience.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

Furthermore, functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification, drawings and exemplary embodiments thereof, can be used synonymously in certain instances, including, but not limited to, *e*.*g*., data and information. It should be understood that, although these words and/or other words that can be synonymous to one another, can be used synonymously herein, that there can be instances when such words can be intended to not be used synonymously. Further, to the extent that the prior art knowledge has not been explicitly incorporated by reference herein above, it is explicitly incorporated herein in its entirety. All publications referenced are incorporated herein by reference in their entireties.

As used herein unless expressly stated to the contrary, the phrases "at least one of" and "one or more of," followed by a conjunctive list of enumerated items (*e*.*g*., "A and B", "A, B, and C"), are intended to mean "at least one item, with each item selected from the list consisting of" the enumerated items. For example, "at least one of A and B" is intended to mean any of the following: A; B; A and B. Likewise, "one or more of A, B, and C" is intended to mean any of the following: A; B; C; A and B; B and C; A and C; A, B, and C.

As used herein unless expressly stated to the contrary, the phrase "a plurality of" followed by a conjunctive list of enumerated items (*e*.*g*., "A and B", "A, B, and C") is intended to mean "multiple items, with each item selected from the list consisting of" the enumerated items. For example, "a plurality of A and B" is intended to mean any of the following: more than one A; more than one B; or at least one A and at least one B.

## Claims

1. A method for a positioning node coupled to a radio access network, RAN, the method comprising:
determining (1140) first spatial relations between downlink reference signals, DL-RS, and uplink reference signals, UL-RS, used for positioning in a first cell served by a first RAN node, wherein the first cell is a serving cell for a user equipment, UE;
determining (1150) second spatial relations between DL-RS and UL-RS used for positioning in one or more second cells served by a second RAN node, wherein the second cells are neighbor cells to the first cell; and
configuring (1160) the UE to transmit UL-RS according to the first and second spatial relations.

2. The method of claim 1, wherein:
configuring (1160) the UE comprises sending (1161), to the first RAN node, a request to configure the UE to transmit UL-RS according to the first and second spatial relations; and
the request includes the first and second spatial relations.

3. The method of claim 2, wherein configuring (1160) the UE further comprises receiving (1162), from the first RAN node, a response including an indication that the UE has been configured to transmit the UL-RS according to the determined spatial relations.

4. The method of claim 3, wherein the response also includes one or more of the following:
identification of UL-RS configurations that were accepted by the UE;
the first or second spatial relation that corresponds to each UL-RS configuration that was accepted by the UE;
an indication that the UE will transmit UL-RS according to at least two UL-RS configurations using substantially the same transmit antenna configuration; and an indication that the UE has rejected an UL-RS configurations because it would require using substantially the same transmit antenna configuration as another UL-RS configuration.

5. The method of any of claims 2-4, further comprising sending (1170), to the second RAN node, a notification that the UE is configured to transmit UL-RS according to the second spatial relations associated with the second cells.

6. The method of any of claims 1-5, wherein:
the first spatial relations and the second spatial relations are associated with respective DL-RS;
for each DL-RS that is a synchronization signal/PBCH block (SSB), the associated first or second spatial relation includes a cell identifier and an SSB index; and
for each DL-RS that is a positioning reference signal (PRS), the associated first or second spatial relation includes a transmission reception point (TRP) identifier and a PRS resource set identifier.

7. The method of any of claims 1-6, further comprising:
receiving (1120), from the first RAN node, first configuration information for DL-RS and UL-RS used for positioning in the first cell; and
receiving (1130), from the second RAN node, second configuration information for DL-RS and UL-RS used for positioning in the one or more second cells, wherein:
determining (1140) the first spatial relations is based on the first configuration information; and
determining (1150) the second spatial relations is based on the second configuration information.

8. A method for a first radio access network, RAN, node configured to support positioning in the RAN, the method comprising:
receiving (1250), from a positioning node, a request to configure a user equipment, UE, to transmit uplink reference signals (UL-RS) for positioning according to first and second spatial relations, wherein:
the request includes the first and second spatial relations,
the first spatial relations are between downlink reference signals (DL-RS) and UL-RS used for positioning in a first cell served by the first RAN node, the first cell is a serving cell for the UE,
the second spatial relations are between DL-RS and UL-RS used for positioning in one or more second cells served by a second RAN node, and
the second cells are neighbor cells to the first cell; and
determining (1260) a plurality of UL-RS configurations corresponding to the first and second spatial relations; and
configuring (1270) the UE to transmit UL-RS according to determined UL-RS configurations.

9. The method of claim 8, wherein:
the determined UL-RS configurations include the first and second spatial relations; and
configuring (1270) the UE comprises sending (1271), to the UE, a configuration message including the first and second spatial relations.

10. The method of claim 9, wherein configuring (1270) the UE further comprises receiving (1272), from the UE, a first response including one or more of the following:
identification of the determined UL-RS configurations that were accepted by the UE;
an indication that the UE will transmit UL-RS according to at least two of the determined UL-RS configurations using substantially the same transmit antenna configuration; and
an indication that the UE has rejected one of the determined UL-RS configurations because it would require using substantially the same transmit antenna configuration as another one of the determined UL-RS configurations.

11. The method of any of claims 8-10, further comprising sending (1280), to the positioning node, a second response indicating that the UE has been configured to transmit the UL-RS according to the first and second spatial relations.

12. A method for a user equipment, UE, configured to support positioning in a radio access network, RAN, the method comprising:
receiving (1330), from a first RAN node, a plurality of uplink reference signals, UL-RS, configurations corresponding to first and second spatial relations, wherein:
the UL-RS configurations include the first and second spatial relations,
the first spatial relations are between downlink reference signals, DL-RS, and UL-RS used for positioning in a first cell served by the first RAN node,
the first cell is a serving cell for the UE,
the second spatial relations are between DL-RS and UL-RS used for positioning in one or more second cells served by a second RAN node, and
the second cells are neighbor cells to the first cell;
determining (1350) transmit antenna configurations corresponding to the respective UL-RS configurations; and
transmitting (1360) UL-RS according to the respective UL-RS configurations and the corresponding transmit antenna configurations.

13. The method of claim 12, wherein:
the first spatial relations and the second spatial relations are associated with respective DL-RS;
for each DL-RS that is a synchronization signal/PBCH block, SSB, the associated first or second spatial relation includes a cell identifier and an SSB index; and
for each DL-RS that is a positioning reference signal, PRS, the associated first or second spatial relation includes a transmission reception point, TRP, identifier and a PRS resource set identifier.

14. The method of any of claims 12-13, wherein determining (1350) the transmit antenna configurations comprises, for each UL-RS configuration:
determining (1351) a receive antenna configuration for a DL-RS associated with the spatial relation included in the UL-RS configuration; and
based on the spatial relation, determining (1352) a transmit antenna configuration that results in a transmit beam that is directionally aligned with a receive beam resulting from the receive antenna configuration.

15. A positioning node (440, 640, 1040) coupled to a radio access network, RAN (100, 599, 620, 1630), the positioning node being further arranged to perform the operations corresponding to any of the methods of claims 1-7.

16. A computer program product (443) comprising computer-executable instructions that, when executed by processing circuitry (442, 642) of a positioning node (440, 640, 1040) coupled to a radio access network, RAN (100, 599, 620, 1630), configure the positioning node to perform the operations corresponding to any of the methods of claims 1-7.

17. A first radio access network, RAN, node (105, 110, 115, 420, 621, 622, 1020, 1500) configured to support positioning in the RAN (100, 599, 620, 1630), the first RAN node being further configured to perform the operations corresponding to any of the methods of claims 8-11.

18. A computer program product (1521) comprising computer-executable instructions that, when executed by processing circuitry (1510) of a first radio access network, RAN, node (105, 110, 115, 420, 621, 622, 1020, 1500) configured to support positioning in the RAN (100, 599, 620, 1630), configure the first RAN node to perform the operations corresponding to any of the methods of claims 8-11.

19. A user equipment, UE (120, 410, 610, 1010, 1400, 1610) configured to support positioning in a radio access network, RAN (100, 599, 620, 1630), the UE being further configured to perform the operations corresponding to any of the methods of claims 12-14.

20. A computer program product (1421) comprising computer-executable instructions that, when executed by processing circuitry (1410) of a user equipment, UE (120, 410, 610, 1010, 1400, 1610) configured to support positioning in a radio access network, RAN (100, 599, 620, 1630), configure the UE to perform the operations corresponding to any of the methods of claims 12-14.

## Patentansprüche

1. Verfahren, das von einem Positionsbestimmungsknoten durchgeführt wird, der mit einem Funkzugangsnetzwerk, RAN, gekoppelt ist, wobei das Verfahren Folgendes umfasst:
Bestimmen (1140) erster räumlicher Beziehungen zwischen Downlink-Referenzsignalen, DL-RS, und Uplink-Referenzsignalen, UL-RS, die zur Positionsbestimmung in einer ersten Zelle verwendet werden, die von einem ersten RAN-Knoten bedient wird, wobei die erste Zelle eine bedienende Zelle für eine Benutzereinrichtung, UE, ist;
Bestimmen (1150) zweiter räumlicher Beziehungen zwischen DL-RS und UL-RS, die zur Positionsbestimmung in einer oder mehreren zweiten Zellen verwendet werden, die von einem zweiten RAN-Knoten bedient werden, wobei die zweiten Zellen Nachbarzellen der ersten Zelle sind; und
Konfigurieren (1160) der UE zum Übertragen von UL-RS gemäß den ersten und zweiten räumlichen Beziehungen.

2. Verfahren nach Anspruch 1, wobei:
das Konfigurieren (1160) der UE ein Senden (1161) einer Anforderung an den ersten RAN-Knoten umfasst, um die UE zum Übertragen von UL-RS gemäß den ersten und zweiten räumlichen Beziehungen zu konfigurieren; und
die Anforderung die ersten und zweiten räumlichen Beziehungen umfasst.

3. Verfahren nach Anspruch 2, wobei das Konfigurieren (1160) der UE ferner ein Empfangen (1162) einer Antwort vom ersten RAN-Knoten umfasst, die eine Angabe umfasst, dass die UE zum Übertragen der UL-RS gemäß den bestimmten räumlichen Beziehungen konfiguriert wurde.

4. Verfahren nach Anspruch 3, wobei die Antwort außerdem eines oder mehrere von Folgenden umfassen:
eine Identifikation von UL-RS-Konfigurationen, die von der UE akzeptiert wurden;
die erste oder die zweite räumliche Beziehung, die jeder UL-RS-Konfiguration entspricht, die von der UE akzeptiert wurde;
eine Angabe, dass die UE UL-RS gemäß mindestens zwei UL-RS-Konfigurationen übertragen wird, die im Wesentlichen dieselbe Sendeantennenkonfiguration verwenden; und
eine Angabe, dass die UE eine UL-RS-Konfiguration abgelehnt hat, da sie erfordern würde, im Wesentlichen dieselbe Sendeantennenkonfiguration wie eine andere UL-RS-Konfiguration zu verwenden.

5. Verfahren nach einem der Ansprüche 2 bis 4, ferner umfassend ein Senden (1170) einer Benachrichtigung an den zweiten RAN-Knoten, dass die UE zum Übertragen von UL-RS gemäß den zweiten räumlichen Beziehungen konfiguriert ist, die mit den zweiten Zellen assoziiert sind.

6. Verfahren nach einem der Ansprüche 1 bis 5, wobei:
die ersten räumlichen Beziehungen und die zweiten räumlichen Beziehungen mit jeweiligen DL-RS assoziiert sind;
die assoziierte erste oder zweite räumliche Beziehung für jedes DL-RS, das ein Synchronisationssignal/PBCH-Block, SSB, ist, eine Zellenkennung und einen SSB-Index umfasst; und
die assoziierte erste oder zweite räumliche Beziehung für jedes DL-RS, das ein Positionsbestimmungsreferenzsignal, PRS, ist, eine Sendeempfangspunktkennung, TRP-Kennung, und eine PRS-Ressourcensatzkennung umfasst.

7. Verfahren nach einem der Ansprüche 1 bis 6, ferner umfassend:
Empfangen (1120) erster Konfigurationsinformationen für DL-RS und UL-RS, die zur Positionsbestimmung in der ersten Zelle verwendet werden, vom ersten RAN-Knoten; und
Empfangen (1130) zweiter Konfigurationsinformationen für DL-RS und UL-RS, die zur Positionsbestimmung in der einen oder den mehreren zweiten Zellen verwendet werden, vom zweiten RAN-Knoten, wobei:
das Bestimmen (1140) der ersten räumlichen Beziehungen auf den ersten Konfigurationsinformationen basiert; und
das Bestimmen (1150) der zweiten räumlichen Beziehungen auf den zweiten Konfigurationsinformationen basiert.

8. Verfahren für einen ersten Funkzugangsnetzwerkknoten, RAN-Knoten, der zum Unterstützen von Positionsbestimmung in dem RAN konfiguriert ist, wobei das Verfahren Folgendes umfasst:
Empfangen (1250) einer Anforderung von einem Positionsbestimmungsknoten zum Konfigurieren einer Benutzereinrichtung, UE, zum Übertragen von Uplink-Referenzsignalen, UL-RS, zur Positionsbestimmung gemäß ersten und zweiten räumlichen Beziehungen, wobei:
die Anforderung die ersten und zweiten räumlichen Beziehungen umfasst,
die ersten räumlichen Beziehungen zwischen Downlink-Referenzsignalen, DL-RS, und UL-RS sind, die zur Positionsbestimmung in einer ersten Zelle verwendet werden, die vom ersten RAN-Knoten bedient wird,
die erste Zelle eine bedienende Zelle für die UE ist,
die zweiten räumlichen Beziehungen zwischen DL-RS und UL-RS sind, die zur Positionsbestimmung in einer oder mehreren zweiten Zellen verwendet werden, die von einem zweiten RAN-Knoten bedient werden,
die zweiten Zellen Nachbarzellen der ersten Zelle sind; und
Bestimmen (1260) einer Mehrzahl von UL-RS-Konfigurationen, die den ersten und zweiten räumlichen Beziehungen entsprechen; und
Konfigurieren (1270) der UE zum Übertragen von UL-RS gemäß den bestimmten UL-RS-Konfigurationen.

9. Verfahren nach Anspruch 8, wobei:
die bestimmten UL-RS-Konfigurationen die ersten und zweiten räumlichen Beziehungen umfassen, und
das Konfigurieren (1270) der UE ein Senden (1271) einer Konfigurationsnachricht an die UE umfasst, die die ersten und zweiten räumlichen Beziehungen umfasst.

10. Verfahren nach Anspruch 9, wobei das Konfigurieren (1270) der UE ferner ein Empfangen (1272) einer ersten Antwort von der UE umfasst, die eines oder mehrere von Folgenden umfasst:
eine Identifikation der bestimmten UL-RS-Konfigurationen, die von der UE akzeptiert wurden;
eine Angabe, dass die UE UL-RS gemäß mindestens zwei der bestimmten UL-RS-Konfigurationen übertragen wird, die im Wesentlichen dieselbe Sendeantennenkonfiguration verwenden; und
eine Angabe, dass die UE eine der bestimmten UL-RS-Konfigurationen abgelehnt hat, da sie erfordern würde, im Wesentlichen dieselbe Sendeantennenkonfiguration wie eine andere der UL-RS-Konfigurationen zu verwenden.

11. Verfahren nach einem der Ansprüche 8 bis 10, ferner umfassend ein Senden (1280) einer zweiten Antwort an den Positionsbestimmungsknoten, die angibt, das die UE zum Übertragen der UL-RS gemäß den ersten und zweiten räumlichen Beziehungen konfiguriert wurde.

12. Verfahren für eine Benutzereinrichtung, UE, die zum Unterstützen von Positionsbestimmung in einem Funkzugangsnetzwerk, RAN, konfiguriert ist, wobei das Verfahren umfasst:
Empfangen (1330) einer Mehrzahl von Uplink-Referenzsignalkonfigurationen, UL-RS-Konfigurationen, die ersten und zweiten räumlichen Beziehungen entsprechen, von einem ersten RAN-Knoten, wobei:
die UL-RS-Konfigurationen erste und zweite räumliche Beziehungen umfassen,
die ersten räumlichen Beziehungen zwischen Downlink-Referenzsignalen, DL-RS, und UL-RS sind, die zur Positionsbestimmung in einer ersten Zelle verwendet werden, die vom ersten RAN-Knoten bedient wird,
die erste Zelle eine bedienende Zelle für die UE ist,
die zweiten räumlichen Beziehungen zwischen DL-RS und UL-RS sind, die zur Positionsbestimmung in einer oder mehreren zweiten Zellen verwendet werden, die von einem zweiten RAN-Knoten bedient werden,
die zweiten Zellen Nachbarzellen der ersten Zelle sind;
Bestimmen (1350) von Sendeantennenkonfigurationen, die den jeweiligen UL-RS-Konfigurationen entsprechen; und
Übertragen (1360) von UL-RS gemäß den jeweiligen UL-RS-Konfigurationen und den entsprechenden Sendeantennenkonfigurationen.

13. Verfahren nach Anspruch 12, wobei:
die ersten räumlichen Beziehungen und die zweiten räumlichen Beziehungen mit jeweiligen DL-RS assoziiert sind;
die assoziierte erste oder zweite räumliche Beziehung für jedes DL-RS, das ein Synchronisationssignal/PBCH-Block, SSB, ist, eine Zellenkennung und einen SSB-Index umfasst; und
die assoziierte erste oder zweite räumliche Beziehung für jedes DL-RS, das ein Positionsbestimmungsreferenzsignal, PRS, ist, eine Sendeempfangspunktkennung, TRP-Kennung, und eine PRS-Ressourcensatzkennung umfasst.

14. Verfahren nach einem der Ansprüche 12 bis 13, wobei das Bestimmen (1350) der Sendeantennenkonfigurationen für jede UL-RS-Konfiguration Folgendes umfasst:
Bestimmen (1351) einer Empfangsantennenkonfiguration für ein DL-RS, das mit der räumlichen Beziehung assoziiert ist, die in der UL-RS-Konfiguration umfasst ist; und
basierend auf der räumlichen Beziehung Bestimmen (1352) einer Sendeantennenkonfiguration, die zu einem Sendestrahl führt, der mit einem Empfangsstrahl, der aus der Empfangsantennenkonfiguration resultiert, richtungsmäßig ausgerichtet ist.

15. Positionsbestimmungsknoten (440, 640, 1040), der mit einem Funkzugangsnetzwerk, RAN, (100, 599, 620, 1630) gekoppelt ist, wobei der Positionsbestimmungsknoten ferner zum Durchführen der Operationen ausgelegt ist, die einem der Verfahren nach Anspruch 1 bis 7 entsprechen.

16. Computerprogrammprodukt (443), umfassend computerausführbare Anweisungen, die bei Ausführung durch Verarbeitungsschaltungsanordnung (442, 642) eines Positionsbestimmungsknotens (440, 640, 1040), der mit einem Funkzugangsnetzwerk, RAN, (100, 599, 620, 1630) gekoppelt ist, den Positionsbestimmungsknoten zum Durchführen der Operationen konfigurieren, die einem der Verfahren nach Anspruch 1 bis 7 entsprechen.

17. Erster Funkzugangsnetzwerkknoten, RAN-Knoten, (105, 110, 115, 420, 621, 622, 1020, 1500), der zum Unterstützen von Positionsbestimmung im RAN (100, 599, 620, 1630) konfiguriert ist, wobei der erste RAN-Knoten ferner zum Durchführen der Operationen konfiguriert ist, die einem der Verfahren nach Anspruch 8 bis 11 entsprechen.

18. Computerprogrammprodukt (1521), umfassend computerausführbare Anweisungen, die bei Ausführung durch Verarbeitungsschaltungsanordnung (1510) eines ersten Funkzugangsnetzwerkknotens, RAN-Knotens, (105, 110, 115, 420, 621, 622, 1020, 1500), der zum Unterstützen von Positionsbestimmung im RAN, (100, 599, 620, 1630) konfiguriert ist, den ersten RAN-Knoten zum Durchführen der Operationen konfigurieren, die einem der Verfahren nach Anspruch 8 bis 11 entsprechen.

19. Benutzereinrichtung, UE, (120, 410, 610, 1010, 1400, 1610), die zum Unterstützen von Positionsbestimmung in einem Funkzugangsnetzwerk, RAN, (100, 599, 620, 1630) konfiguriert ist, wobei die UE ferner zum Durchführen der Operationen konfiguriert ist, die einem der Verfahren nach Anspruch 12 bis 14 entsprechen.

20. Computerprogrammprodukt (1421), umfassend computerausführbare Anweisungen, die bei Ausführung durch Verarbeitungsschaltungsanordnung (1410) einer Benutzereinrichtung, UE, (120, 410, 610, 1010, 1400, 1610), die zum Unterstützen von Positionsbestimmung in einem Funkzugangsnetzwerk, RAN, (100, 599, 620, 1630) konfiguriert ist, die UE zum Durchführen der Operationen konfigurieren, die einem der Verfahren nach Anspruch 12 bis 14 entsprechen.

## Revendications

1. Procédé pour un noeud de positionnement couplé à un réseau d'accès radio, RAN, le procédé comprenant :
la détermination (1140) de premières relations spatiales entre des signaux de référence de liaison descendante, DL-RS, et des signaux de référence de liaison montante, UL-RS, utilisés pour le positionnement dans une première cellule desservie par un premier noeud RAN, dans lequel la première cellule est une cellule de desserte pour un équipement utilisateur, UE ;
la détermination (1150) de deux deuxièmes relations spatiales entre des DL-RS et des UL-RS utilisés pour le positionnement dans une ou plusieurs deuxièmes cellules desservies par un deuxième noeud RAN, dans lequel les deuxièmes cellules sont des cellules voisines de la première cellule ; et
la configuration (1160) de l'UE pour transmettre des UL-RS en fonction des premières et deuxièmes relations spatiales.

2. Procédé selon la revendication 1, dans lequel :
la configuration (1160) de l'UE comprend l'envoi (1161), au premier noeud RAN, d'une demande de configuration de l'UE pour transmettre des UL-RS en fonction des premières et deuxièmes relations spatiales ; et
la demande comprend les premières et deuxièmes relations spatiales.

3. Procédé selon la revendication 2, dans lequel la configuration (1160) de l'UE comprend en outre la réception (1162), depuis le premier noeud RAN, d'une réponse comprenant une indication que l'UE a été configuré pour transmettre les UL-RS en fonction des relations spatiales déterminées.

4. Procédé selon la revendication 3, dans lequel la réponse comprend également une ou plusieurs parmi ce qui suit :
une identification des configurations UL-RS qui ont été acceptées par l'UE ;
la première ou deuxième relation spatiale qui correspond à chaque configuration UL-RS qui a été acceptée par l'UE ;
une indication que l'UE transmettra des UL-RS en fonction d'au moins deux configurations UL-RS à l'aide de sensiblement la même configuration d'antenne de transmission ; et
une indication que l'UE a rejeté une configuration UL-RS parce qu'elle nécessiterait l'utilisation de sensiblement la même configuration d'antenne de transmission qu'une autre configuration UL-RS.

5. Procédé selon l'une quelconque des revendications 2 à 4, comprenant en outre l'envoi (1170), au deuxième noeud RAN, d'une notification que l'UE est configuré pour transmettre des UL-RS en fonction des deuxièmes relations spatiales associées aux deuxièmes cellules.

6. Procédé selon l'une quelconque des revendications 1 à 5, dans lequel :
les premières relations spatiales et les deuxièmes relations spatiales sont associées à des DL-RS respectifs ;
pour chaque DL-RS qui est un bloc de signal de synchronisation/PBCH (SSB), la première ou deuxième relation spatiale associée comprend un identifiant de cellule et un indice SSB ; et
pour chaque DL-RS qui est un signal de référence de positionnement (PRS), la première ou deuxième relation spatiale associée comprend un identifiant de point de réception de transmission (TRP) et un identifiant d'ensemble de ressources PRS.

7. Procédé selon l'une quelconque des revendications 1 à 6, comprenant en outre :
la réception (1120), depuis le premier noeud RAN, de premières informations de configuration pour des DL-RS et des UL-RS utilisés pour le positionnement dans la première cellule ; et
la réception (1130), depuis le deuxième noeud RAN, de deuxièmes informations de configuration pour des DL-RS et des UL-RS utilisés pour le positionnement dans les une ou plusieurs deuxièmes cellules, dans lequel :
la détermination (1140) des premières relations spatiales est basée sur les premières informations de configuration ; et
la détermination (1150) des deuxièmes relations spatiales est basée sur les deuxièmes informations de configuration.

8. Procédé pour un premier noeud de réseau d'accès radio, RAN, configuré pour prendre en charge le positionnement dans le RAN, le procédé comprenant :
la réception (1250), depuis un noeud de positionnement, d'une demande de configuration d'un équipement utilisateur, UE, pour transmettre des signaux de référence de liaison montante (UL-RS) pour le positionnement en fonction de premières et deuxièmes relations spatiales, dans lequel :
la demande comprend les premières et deuxièmes relations spatiales,
les premières relations spatiales sont entre des signaux de référence de liaison descendante (DL-RS) et des UL-RS utilisés pour le positionnement dans une première cellule desservie par le premier noeud RAN,
la première cellule est une cellule de desserte pour l'UE,
les deux deuxièmes relations spatiales sont entre des DL-RS et des UL-RS utilisés pour le positionnement dans une ou plusieurs deuxièmes cellules desservies par un deuxième noeud RAN, et
les deuxièmes cellules sont des cellules voisines de la première cellule ; et
la détermination (1260) d'une pluralité de configuration UL-RS correspondant aux premières et deuxièmes relations spatiales ; et
la configuration (1270) de l'UE pour transmettre des UL-RS en fonction des configurations UL-RS déterminées.

9. Procédé selon la revendication 8, dans lequel :
les configurations UL-RS déterminées comprennent les premières et deuxièmes relations spatiales ; et
la configuration (1270) de l'UE comprend l'envoi (1271), à l'UE, d'un message de configuration comprenant les premières et deuxièmes relations spatiales.

10. Procédé selon la revendication 9, dans lequel la configuration (1270) de l'UE comprend la réception (1272), depuis l'UE, d'une première réponse comprenant une ou plusieurs parmi ce qui suit :
une identification des configurations UL-RS déterminées qui ont été acceptées par l'UE ;
une indication que l'UE transmettra des UL-RS en fonction d'au moins deux des configurations UL-RS déterminées à l'aide de sensiblement la même configuration d'antenne de transmission ; et
une indication que l'UE a rejeté l'une des configuration UL-RS déterminées parce qu'elle nécessiterait l'utilisation de sensiblement la même configuration d'antenne de transmission qu'une autre des configurations UL-RS déterminées.

11. Procédé selon l'une quelconque des revendications 8 à 10, comprenant en outre l'envoi (1280), au noeud de positionnement, d'une deuxième réponse indiquant que l'UE a été configuré pour transmettre les UL-RS en fonction des premières et deuxièmes relations spatiales.

12. Procédé pour un équipement utilisateur, UE, configuré pour prendre en charge le positionnement dans un réseau d'accès radio, RAN, le procédé comprenant :
la réception (1330), depuis un premier noeud RAN, d'une pluralité de configurations de signaux de référence de liaison montante, UL-RS, correspondant à des premières et deuxièmes relations spatiales, dans lequel :
les configurations UL-RS comprennent les premières et deuxièmes relations spatiales,
les premières relations spatiales sont entre des signaux de référence de liaison descendante, DL-RS, et des UL-RS utilisés pour le positionnement dans une première cellule desservie par le premier noeud RAN,
la première cellule est une cellule de desserte pour l'UE,
les deux deuxièmes relations spatiales sont entre des DL-RS et des UL-RS utilisés pour le positionnement dans une ou plusieurs deuxièmes cellules desservies par un deuxième noeud RAN, et
les deuxièmes cellules sont des cellules voisines de la première cellule ;
la détermination (1350) de configurations d'antenne de transmission correspondant aux configurations UL-RS respectives ; et
la transmission (1360) d'UL-RS en fonction des configurations UL-RS respectives et des configurations d'antenne de transmission correspondantes.

13. Procédé selon la revendication 12, dans lequel :
les premières relations spatiales et les deuxièmes relations spatiales sont associées à des DL-RS respectifs ;
pour chaque DL-RS qui est un bloc de signal de synchronisation/PBCH, SSB, la première ou deuxième relation spatiale associée comprend un identifiant de cellule et un indice SSB ; et
pour chaque DL-RS qui est un signal de référence de positionnement, PRS, la première ou deuxième relation spatiale associée comprend un identifiant de point de réception de transmission, TRP, et un identifiant d'ensemble de ressources PRS.

14. Procédé selon la revendication 12 ou 13, dans lequel la détermination (1350) des configurations d'antenne de transmission comprend, pour chaque configuration UL-RS :
la détermination (1351) d'une configuration d'antenne de réception pour un DL-RS associé à la relation spatiale comprise dans la configuration UL-RS ; et
sur la base de la relation spatiale, la détermination (1352) d'une configuration d'antenne de transmission qui engendre un faisceau de transmission qui est directionnellement aligné avec un faisceau de réception découlant de la configuration d'antenne de réception.

15. Noeud de positionnement (440, 640, 1040) couplé à un réseau d'accès radio, RAN (100, 599, 620, 1630), le noeud de positionnement étant en outre agencé pour réaliser les opérations correspondant à l'un quelconque des procédés selon les revendications 1 à 7.

16. Produit programme informatique (443) comprenant des instructions exécutables par ordinateur qui, lorsqu'elles sont exécutées par une circuiterie de traitement (442, 642) d'un noeud de positionnement (440, 640, 1040) couplé à un réseau d'accès radio, RAN (100, 599, 620, 1630), configurent le noeud de positionnement pour réaliser les opérations correspondant à l'un quelconque des procédés selon les revendications 1 à 7.

17. Premier noeud de réseau d'accès radio, RAN (105, 110, 115, 420, 621, 622, 1020, 1500) configuré pour prendre en charge le positionnement dans le RAN (100, 599, 620, 1630), le premier noeud RAN étant en outre configuré pour réaliser les opérations correspondant à l'un quelconque des procédés selon les revendications 8 à 11.

18. Produit programme informatique (1521) comprenant des instructions exécutables par ordinateur qui, lorsqu'elles sont exécutées par une circuiterie de traitement (1510) d'un premier noeud de réseau d'accès radio, RAN (105, 110, 115, 420, 621, 622, 1020, 1500) configuré pour prendre en charge le positionnement dans le RAN (100, 599, 620, 1630), configurent le premier noeud RAN pour réaliser les opérations correspondant à l'un quelconque des procédés selon les revendications 8 à 11.

19. Equipement utilisateur, UE (120, 410, 610, 1010, 1400, 1610) configuré pour prendre en charge le positionnement dans un réseau d'accès radio, RAN (100, 599, 620, 1630), l'UE étant en outre configuré pour réaliser les opérations correspondant à l'un quelconque des procédés selon les revendications 12 à 14.

20. Produit programme informatique (1421) comprenant des instructions exécutables par ordinateur qui, lorsqu'elles sont exécutées par une circuiterie de traitement (1410) d'un équipement utilisateur, UE (120, 410, 610, 1010, 1400, 1610) configuré pour prendre en charge le positionnement dans un réseau d'accès radio, RAN (100, 599, 620, 1630), configurent l'UE pour réaliser les opérations correspondant à l'un quelconque des procédés selon les revendications 12 à 14.
